# EUROPÄISCHE PATENTSCHRIFT

(11) **EP 4 140 102 B1**
(45) Veröffentlichungstag und Bekanntmachung des Hinweises auf die Patenterteilung: **26.03.2025**
(21) Anmeldenummer: 21717439.0
(22) Anmeldetag: 08.04.2021
(51) Int. Cl.: H04L 12/40

(54) **KOMMUNIKATIONSSTEUEREINRICHTUNG UND SENDE-/EMPFANGSEINRICHTUNG FÜR EINE TEILNEHMERSTATION EINES SERIELLEN BUSSYSTEMS UND VERFAHREN ZUR KOMMUNIKATION IN EINEM SERIELLEN BUSSYSTEM**
COMMUNICATION CONTROL DEVICE AND TRANSMITTING/RECEIVING DEVICE FOR A SUBSCRIBER STATION OF A SERIAL BUS SYSTEM, AND METHOD FOR COMMUNICATION IN A SERIAL BUS SYSTEM
DISPOSITIF DE COMMANDE DE COMMUNICATION ET DISPOSITIF D'ÉMISSION/RÉCEPTION POUR UN POSTE D'ABONNÉ D'UN SYSTÈME DE BUS SÉRIE, ET PROCÉDÉ DE COMMUNICATION DANS UN SYSTÈME DE BUS SÉRIE

(30) Priorität: 24.04.2020 DE 102020205257
(43) Veröffentlichungstag der Anmeldung: 01.03.2023
(73) Patentinhaber: Robert Bosch GmbH, 70442 Stuttgart (DE)
(72) Erfinder: HARTWICH, Florian, 72762 Reutlingen (DE); WALKER, Steffen, 72770 Reutlingen (DE); MUTTER, Arthur, 73765 Neuhausen (DE)
(86) Internationale Anmeldenummer: PCT/EP2021/059203
(87) Internationale Veröffentlichungsnummer: WO 2021/213810

(56) Entgegenhaltungen:
- DE-A1- 102006 019 305
- DE-A1- 102016 224 961

## Beschreibung

### Technisches Gebiet

Die vorliegende Erfindung betrifft eine Kommunikationssteuereinrichtung und eine Sende-/Empfangseinrichtung für eine Teilnehmerstation eines seriellen Bussystems und ein Verfahren zur Kommunikation in einem seriellen Bussystem, das mit hoher Datenrate und großer Fehlerrobustheit arbeitet.

### Stand der Technik

Für die Kommunikation zwischen Sensoren und Steuergeräten, beispielsweise in Fahrzeugen, wird häufig ein Bussystem eingesetzt, in welchem Daten als Nachrichten im Standard ISO11898-1:2015 als CAN Protokoll-Spezifikation mit CAN FD übertragen werden. Die Nachrichten werden zwischen den Busteilnehmern des Bussystems, wie Sensor, Steuergerät, Geber, usw., übertragen.

DE 10 2006 019 305 A1 beschreibt ein Verfahren zur Datenübertragung von und zu einem Steuergerät, insbesondere einem Motorsteuergerät für ein Kraftfahrzeug. Das Steuergerät hat eine erste Kommunikationsschnittstelle und eine zweite Kommunikationsschnittstelle. Die erste Kommunikationsschnittstelle ist zur bidirektionalen Kommunikation mit einem Entwicklungstool nutzbar oder alternativ in einen CAN-Bus schaltbar. Die zweite Kommunikationsschnittstelle ist nur zur Kommunikation in dem CAN-Bus vorgesehen. Die Datenübertragung zwischen Steuergerät und Entwicklungstool kann zeitgleich mit einer Kommunikation des Steuergeräts im CAN-Bus erfolgen.

Um Daten mit höherer Bitrate übertragen zu können als bei CAN, besteht im CAN FD Nachrichten-Format eine Option zur Umschaltung auf eine höhere Bitrate innerhalb einer Nachricht. Hierbei wird die maximal mögliche Datenrate durch Einsatz einer höheren Taktung im Bereich der Datenfelder über einen Wert von 1 MBit/s hinaus gesteigert. Solche Nachrichten werden nachfolgend auch als CAN FD-Rahmen oder CAN FD-Nachrichten bezeichnet. Bei CAN FD ist die Nutzdatenlänge von 8 auf bis zu 64 Bytes erweitert und die Datenübertragungsraten sind deutlich höher als bei CAN.

Um Daten schneller vom sendenden Busteilnehmer zum empfangenden Busteilnehmer zu übertragen als bei CAN FD, ist derzeit ein CAN FD-Nachfolge-Bussystem in Entwicklung, welches CAN XL genannt wird. Hierbei soll neben einer höheren Datenrate in der Datenphase als bei CAN FD auch die bisher mit CAN FD erreichte Nutzdatenlänge von bis zu 64 Bytes erhöht werden. Jedoch sollen auch bei dem CAN FD-Nachfolge-Bussystem die Vorteile der Robustheit eines CAN oder CAN FD basierten Kommunikationsnetzwerks erhalten bleiben.

Je schneller die Daten auf dem Bus übertragen werden, desto höhere Anforderungen sind an die Qualität des Signals zu stellen, das der Protocol-Controller der Teilnehmerstation vom Bus empfängt. Ist beispielsweise die Flankensteilheit der Bits des empfangenen Signals zu gering, so kann das zu stark asymmetrischen Bits führen, und somit kann das empfangene Signal eventuell nicht korrekt decodiert werden.

Wird die Flankensteilheit der Bits des empfangenen Signals erhöht, ergibt sich eine zu hohe Abstrahlung. Dies führt zu Kosten an anderer Stelle, z.B. auf der Leiterplatine und im Mikrocontroller für die Teilnehmerstation.

### Offenbarung der Erfindung

Daher ist es Aufgabe der vorliegenden Erfindung, eine Kommunikationssteuereinrichtung und eine Sende-/Empfangseinrichtung für eine Teilnehmerstation eines seriellen Bussystems und ein Verfahren zur Kommunikation in einem seriellen Bussystem bereitzustellen, welche die zuvor genannten Probleme lösen. Insbesondere sollen eine Kommunikationssteuereinrichtung und eine Sende-/Empfangseinrichtung für eine Teilnehmerstation eines seriellen Bussystems und ein Verfahren zur Kommunikation in einem seriellen Bussystem bereitgestellt werden, bei welchen bei großer Fehlerrobustheit eine hohe Datenrate und eine Steigerung der Menge der Nutzdaten pro Rahmen realisiert werden kann.

Die Aufgabe wird durch eine Kommunikationssteuereinrichtung für eine Teilnehmerstation eines seriellen Bussystems mit den Merkmalen von Anspruch 1 gelöst. Die Kommunikationssteuereinrichtung hat ein Kommunikationssteuermodul zum Erzeugen eines Sendesignals zum Steuern einer Kommunikation der Teilnehmerstation mit mindestens einer anderen Teilnehmerstation des Bussystems, bei welchem Bussystem zum Austausch von Nachrichten zwischen Teilnehmerstationen des Bussystems mindestens eine erste Kommunikationsphase und eine zweite Kommunikationsphase verwendet werden, einen ersten Anschluss zum Senden, in einer Betriebsart der ersten Kommunikationsphase, des Sendesignals an eine Sende-/Empfangseinrichtung, die zum Senden des Sendesignals auf einen Bus des Bussystems ausgestaltet ist, einen zweiten Anschluss zum Empfangen, in der Betriebsart der ersten Kommunikationsphase, eines digitalen Empfangssignals von der Sende-/Empfangseinrichtung, und einem Betriebsartschaltmodul zum Schalten der Übertragungsrichtung des ersten und zweiten Anschlusses in der zweiten Kommunikationsphase in die gleiche Richtung für eine differentielle Signalübertragung über den ersten und zweiten Anschluss, wie in Anspruch 1 beschrieben.

Mit der Kommunikationssteuereinrichtung ist es möglich, ohne zusätzliche teure Anschlüsse zwischen der Kommunikationssteuereinrichtung und der Sende-/Empfangseinrichtung die benötigte schnelle Datenübertragung mit sehr hoher Bit-Symmetrie für das CAN FD Nachfolgebussystem bereitzustellen.

Dabei ist die Kommunikationssteuereinrichtung vorteilhaft derart ausgestaltet, dass die Symmetrie der Bits in einem Empfangssignal RxD erhalten bleibt, das die Sende-/Empfangseinrichtung aus einem vom Bus empfangenen Signal erzeugt hat und an die Kommunikationssteuereinrichtung sendet. Dies gilt sowohl beim Senden als auch beim Empfangen von CAN Rahmen, also auch beim Sendesignal TxD.

Außerdem kann auch bei der differentiellen Übertragung des Empfangssignal RxD zwischen der Sende-/Empfangseinrichtung (Transceiver) und der Kommunikationssteuereinrichtung (Mikrocontroller) eine NRZ-Codierung (NRZ = Non-Return-To-Zero) erhalten bleiben. Als Folge davon können zur Datenübertragung zwischen der Sende-/Empfangseinrichtung (Transceiver) und der Kommunikationssteuereinrichtung (Mikrocontroller) nun Anschlüsse (Pins) mit langsamen Flanken verwendet werden. Die resultierende geringere Flankensteilheit der Bits des empfangenen und gesendeten Signals, reduziert die Abstrahlung des Systems wesentlich.

Somit kann eine derartige Flankensteilheit der Bits des empfangenen und gesendeten Signals, gewählt werden, dass die Anforderungen an die Abstrahlung problemlos erfüllt werden können. Außerdem muss die Kommunikationssteuereinrichtung zur Erhaltung der Symmetrie des Signals keine komplexen Line Coding Verfahren verwenden, wie beispielsweise PWM Codierung, Manchester Codierung. Damit reduziert sich die Komplexität der Datenübertragung und der Decodierung des Sendesignals TxD und Empfangssignals RxD.

Darüber hinaus kann mit der Kommunikationssteuereinrichtung in einer der Kommunikationsphasen eine von CAN bekannte Arbitration beibehalten werden und dennoch die Übertragungsrate gegenüber CAN oder CAN FD nochmals beträchtlich gesteigert werden. Dies kann dadurch erreicht werden, dass zwei Kommunikationsphasen mit unterschiedlicher Bitrate verwendet werden und der Beginn der zweiten Kommunikationsphase, in welcher die Nutzdaten mit höherer Bitrate als in der Arbitration übertragen werden, für die Sende-/Empfangseinrichtung sicher kenntlich gemacht wird. Daher kann die Sende-/Empfangseinrichtung sicher von einer ersten Kommunikationsphase in die zweite Kommunikationsphase umschalten.

Als Folge davon ist eine deutliche Steigerung der Bitrate und damit der Übertragungsgeschwindigkeit von Sender zum Empfänger realisierbar. Hierbei ist jedoch gleichzeitig eine große Fehlerrobustheit gewährleistet. Dies trägt mit dazu bei, eine Nettodatenrate von mindestens 10 Mbps zu realisieren. Noch dazu kann die Größe der Nutzdaten größer als 64 Byte sein, insbesondere bis zu 2048 Byte pro Rahmen betragen, oder je nach Bedarf eine beliebige Länge haben.

Das von der Kommunikationssteuereinrichtung durchgeführte Verfahren kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Kommunikationssteuereinrichtung sind in den abhängigen Ansprüchen angegeben.

Das Betriebsartschaltmodul kann ausgestaltet sein, in einer ersten Betriebsart der zweiten Kommunikationsphase den ersten und zweiten Anschluss als Ausgang zu schalten und aus dem Sendesignal ein inverses digitales Sendesignal zu erzeugen sowie das Sendesignal an dem ersten Anschluss und das dazu inverse digitale Sendesignal an dem zweiten Anschluss auszugeben. Zusätzlich oder alternativ kann das Betriebsartschaltmodul ausgestaltet sein, in einer zweiten Betriebsart der zweiten Kommunikationsphase den ersten und zweiten Anschluss als Eingang zu schalten und aus dem an dem ersten und zweiten Anschluss empfangenen differentiellen Empfangssignal ein nicht-differentielles Empfangssignal zu erzeugen und an das Kommunikationssteuermodul auszugeben.

Gemäß einem Ausführungsbeispiel ist das Betriebsartschaltmodul ausgestaltet, in der ersten Betriebsart der zweiten Kommunikationsphase an den beiden Anschlüssen für eine vorbestimmte Zeitdauer die beiden Sendesignale mit demselben Pegel zu erzeugen und auszugeben, um der Sende-Empfangseinrichtung zu signalisieren, dass die Betriebsart der Sende-Empfangseinrichtung von der ersten Betriebsart der zweiten Kommunikationsphase in die Betriebsart der ersten Kommunikationsphase zu schalten ist.

Gemäß einem Ausführungsbeispiel ist das Betriebsartschaltmodul ausgestaltet, der Sende-Empfangseinrichtung über den ersten oder zweiten Anschluss zu signalisieren, dass die Sende-Empfangseinrichtung ihre Betriebsart von der Betriebsart der ersten Kommunikationsphase in eine vorbestimmte Betriebsart der zweiten Kommunikationsphase zu schalten hat.

Beispielsweise ist das Kommunikationssteuermodul ausgestaltet, das Sendesignal in der ersten Kommunikationsphase mit Bits mit einer ersten Bitzeit zu erzeugen, die um mindestens den Faktor 10 größer als eine zweite Bitzeit von Bits ist, die das Kommunikationssteuermodul in der zweiten Kommunikationsphase in dem Sendesignal erzeugt.

Die zuvor genannte Aufgabe wird zudem durch eine Sende-/Empfangseinrichtung für eine Teilnehmerstation eines seriellen Bussystems mit den Merkmalen von Anspruch 6 gelöst. Die Sende-/Empfangseinrichtung hat ein Sende-/Empfangsmodul zum Senden eines Sendesignals auf einen Bus des Bussystems, bei welchem Bussystem zum Austausch von Nachrichten zwischen Teilnehmerstationen des Bussystems mindestens eine erste Kommunikationsphase und eine zweite Kommunikationsphase verwendet werden, und zum Erzeugen eines digitalen Empfangssignals aus einem von dem Bus empfangenen Signal, einen ersten Anschluss zum Empfang, in einer Betriebsart der ersten Kommunikationsphase, eines Sendesignals von einer Kommunikationssteuereinrichtung, einen zweiten Anschluss zum Senden, in einer Betriebsart der ersten Kommunikationsphase, des digitalen Empfangssignals an die Kommunikationssteuereinrichtung, und ein Betriebsartschaltmodul zum Schalten der Übertragungsrichtung des ersten und zweiten Anschlusses in der zweiten Kommunikationsphase in die gleiche Richtung für eine differentielle Signalübertragung über den ersten und zweiten Anschluss, wie in Anspruch 6 beschrieben.

Die Sende-/Empfangseinrichtung bietet dieselben Vorteile, wie sie zuvor in Bezug auf die Kommunikationssteuereinrichtung genannt sind. Vorteilhafte weitere Ausgestaltungen der Sende-/Empfangseinrichtung sind in den abhängigen Ansprüchen angegeben.

Das Betriebsartschaltmodul kann ausgestaltet sein, in einer ersten Betriebsart der zweiten Kommunikationsphase den ersten und zweiten Anschluss als Eingang zu schalten und aus dem an dem ersten Anschluss und dem zweiten Anschluss empfangenen differentiellen digitalen Sendesignal ein nicht-differentielles Sendesignal zu erzeugen. Zusätzlich der alternativ kann das Betriebsartschaltmodul ausgestaltet sein, in einer zweiten Betriebsart der zweiten Kommunikationsphase den ersten und zweiten Anschluss als Ausgang zu schalten und aus dem digitalen Empfangssignal ein inverses digitales Empfangssignal zu erzeugen sowie das digitale Empfangssignal an dem zweiten Anschluss und das dazu inverse digitale Empfangssignal an dem ersten Anschluss auszugeben.

Gemäß einem Ausführungsbeispiel ist das Betriebsartschaltmodul ausgestaltet, in der zweiten Betriebsart der zweiten Kommunikationsphase an den beiden Anschlüssen für eine vorbestimmte Zeitdauer die beiden Empfangssignale mit demselben Pegel zu erzeugen und auszugeben, um der Kommunikationssteuereinrichtung Zusatzinformationen zu signalisieren, die zusätzlich zu Informationen der Signale sind, die in dem Bussystem mit den Nachrichten zwischen Teilnehmerstationen des Bussystems ausgetauscht werden.

Optional ist das Sende-/Empfangsmodul ausgestaltet, das Sendesignal als differentielles Signal auf den Bus zu senden.

Das Betriebsartschaltmodul kann ausgestaltet sein, die Übertragungsrichtung des ersten und zweiten Anschlusses abhängig von einer Betriebsart zu wählen, in welche die Sende-/Empfangseinrichtung geschaltet ist.

Die zuvor beschriebenen Einrichtungen haben möglicherweise zudem einen Richtungssteuerblock zum Steuern der Übertragungsrichtung des ersten und zweiten Anschlusses in Abhängigkeit von der Betriebsart der Sende-/Empfangseinrichtung, einen Codierblock zum Codieren der differentiellen Signale, einen Decodierblock zum Decodieren des differentiellen Signals an dem ersten und zweiten Anschluss in ein nicht-differentielles Signal, und einen Multiplexer zum Ausgeben des von dem Decodierblock erzeugten nicht-differentiellen Signals, wenn die Sende-/Empfangseinrichtung in eine Betriebsart der zweiten Kommunikationsphase geschaltet ist.

Gemäß einer Option ist das in der ersten Kommunikationsphase von dem Bus empfangene Signal mit einem anderen Physical Layer erzeugt als das in der zweiten Kommunikationsphase von dem Bus empfangene Signal.

Denkbar ist, dass in der ersten Kommunikationsphase ausgehandelt wird, welche der Teilnehmerstationen des Bussystems in der nachfolgenden zweiten Kommunikationsphase einen zumindest zeitweise exklusiven, kollisionsfreien Zugriff auf den Bus bekommt.

Die zuvor beschriebene Kommunikationssteuereinrichtung und die zuvor beschriebene Sende-/Empfangseinrichtung können Teil einer Teilnehmerstation eines Bussystems sein, das zudem einen Bus und mindestens zwei Teilnehmerstationen umfasst, welche über den Bus derart miteinander verbunden sind, dass sie seriell miteinander kommunizieren können. Hierbei weist mindestens eine der mindestens zwei Teilnehmerstationen eine zuvor beschriebene Kommunikationssteuereinrichtung und eine zuvor beschriebene Sende-/Empfangseinrichtung auf.

Die zuvor genannte Aufgabe wird zudem durch ein Verfahren zur Kommunikation in einem seriellen Bussystem nach Anspruch 15 gelöst. Das Verfahren wird mit einer Teilnehmerstation für ein Bussystem ausgeführt, bei welchem zum Austausch von Nachrichten zwischen Teilnehmerstationen des Bussystems mindestens eine erste Kommunikationsphase und eine zweite Kommunikationsphase verwendet werden, wobei die Teilnehmerstation eine zuvor beschriebene Kommunikationssteuereinrichtung und eine zuvor beschriebene Sende-/Empfangseinrichtung aufweist, und wobei das Verfahren die Schritte aufweist Schalten, mit einem Betriebsartschaltmodul für die Kommunikationssteuereinrichtung, der Übertragungsrichtung des ersten und zweiten Anschlusses für die Kommunikationssteuereinrichtung in der zweiten Kommunikationsphase in die gleiche Richtung, und Schalten, mit einem Betriebsartschaltmodul für die Sende-/Empfangseinrichtung, der Übertragungsrichtung des ersten und zweiten Anschlusses für die Sende-/Empfangseinrichtung in der zweiten Kommunikationsphase in die gleiche Richtung, die sich von der Richtung unterscheidet, in die der erste und zweite Anschluss für die Kommunikationssteuereinrichtung geschaltet sind, und Ausführen einer differentiellen Signalübertragung zwischen der Kommunikationssteuereinrichtung und der Sende-/Empfangseinrichtung über den ersten und zweiten Anschluss für die Kommunikationssteuereinrichtung und den ersten und zweiten Anschluss für die Sende-/Empfangseinrichtung, wie in Anspruch 15 beschrieben.

Das Verfahren bietet dieselben Vorteile, wie sie zuvor in Bezug auf die Kommunikationssteuereinrichtung und/oder die Sende-/Empfangseinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus von Nachrichten, die von Teilnehmerstationen des Bussystems gemäß dem ersten Ausführungsbeispiel gesendet werden können;
Fig. 3 ein vereinfachtes schematisches Blockschaltbild einer Teilnehmerstation des Bussystems gemäß dem ersten Ausführungsbeispiel;
Fig. 4 bis Fig. 7 jeweils eine zeitliche Darstellung von Signalen bzw. Zuständen an der Teilnehmerstation von Fig. 3, wenn die Teilnehmerstation Sender einer über einen Bus des Bussystems gesendeten Nachricht ist;
Fig. 8 bis Fig. 11 jeweils eine zeitliche Darstellung von Signalen bzw. Zuständen an der Teilnehmerstation von Fig. 3, wenn die Teilnehmerstation Empfänger einer über den Bus des Bussystems gesendeten Nachricht ist; und
Fig. 12 bis Fig. 16 jeweils eine zeitliche Darstellung von Signalen bzw. Zuständen an der Teilnehmerstation von Fig. 3 bei einem zweiten Ausführungsbeispiel, wenn die Teilnehmerstation in der Datenphase Sender einer über den Bus des Bussystems gesendeten Nachricht ist und von der Datenphase in die Arbitrationsphase zurückschaltet.

In den Figuren sind gleiche oder funktionsgleiche Elemente, sofern nichts anderes angegeben ist, mit denselben Bezugszeichen versehen.

### Beschreibung der Ausführungsbeispiele

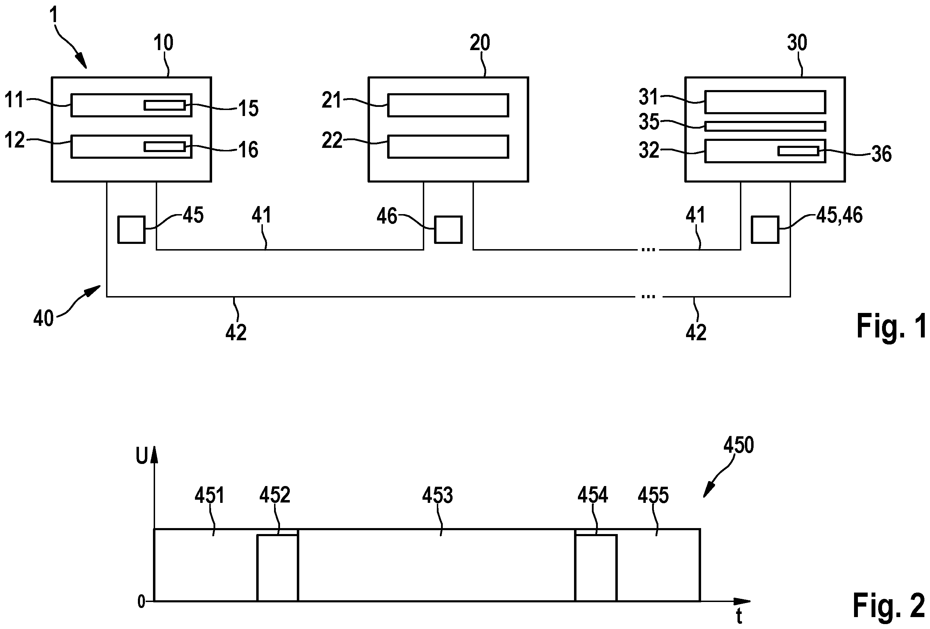

Fig. 1 zeigt als Beispiel ein Bussystem 1, das insbesondere grundlegend für ein CAN-Bussystem, ein CAN FD-Bussystem, ein CAN FD-Nachfolge-Bussystem, und/oder Abwandlungen davon, ausgestaltet ist, wie nachfolgend beschrieben. Das CAN FD-Nachfolge-Bussystem wird nachfolgend CAN XL genannt. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur elektrischen Signalübertragung nach Einkopplung der dominanten Pegel bzw. Erzeugung von rezessiven Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12, ein erstes Betriebsartschaltmodul 15 und ein zweites Betriebsartschaltmodul 16. Im Unterschied dazu hat die Teilnehmerstation 20 eine Kommunikationssteuereinrichtung 21 und eine Sende-/Empfangseinrichtung 22. Die Teilnehmerstation 30 hat eine Kommunikationssteuereinrichtung 31, eine Sende-/Empfangseinrichtung 32, ein erstes Betriebsartschaltmodul 35 und ein zweites Betriebsartschaltmodul 36. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

In jeder Teilnehmerstation 10, 20, 30 werden die Nachrichten 45, 46 codiert in Form von Rahmen über eine TXD-Leitung und eine RXD-Leitung bitweise zwischen der jeweiligen Kommunikationssteuereinrichtung 11, 21, 31 und der zugehörigen Sende-/Empfangseinrichtungen 12, 22, 32 ausgetauscht. Dies ist nachfolgend genauer beschrieben.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

Die Kommunikationssteuereinrichtungen 11, 31 erstellen und lesen erste Nachrichten 45, die beispielsweise modifizierte CAN Nachrichten 45 sind, die nachfolgend auch CAN XL Nachrichten 45 genannt werden. Hierbei sind die CAN XL Nachrichten 45 auf der Grundlage eines CAN FD-Nachfolgeformats aufgebaut, das in Bezug auf Fig. 2 detaillierter beschrieben ist. Die Kommunikationssteuereinrichtungen 11, 31 können zudem ausgeführt sein, um je nach Bedarf eine CAN XL-Nachricht 45 oder eine CAN FD-Nachricht 46 für die Sende-/Empfangseinrichtungen 12, 32 bereitzustellen oder von dieser zu empfangen. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN XL oder CAN FD.

Die Kommunikationssteuereinrichtung 21 kann wie ein herkömmlicher CAN-Controller nach ISO 11898-1:2015 ausgeführt sein, insbesondere wie ein CAN FD toleranter Classical CAN-Controller oder ein CAN FD-Controller. Die Kommunikationssteuereinrichtung 21 erstellt und liest zweite Nachrichten 46, beispielsweise Classical CAN Nachrichten oder CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachricht übertragen werden. Im letzteren Fall ist die Kommunikationssteuereinrichtung 21 wie ein herkömmlicher CAN FD-Controller ausgeführt.

Die Sende-/Empfangseinrichtungen 12, 32 können bis auf die nachfolgend noch genauer beschriebenen Unterschiede als CAN XL-Transceiver ausgeführt sein. Die Sende-/Empfangseinrichtungen 12, 32 sind zusätzlich oder alternativ wie ein herkömmlicher CAN FD Transceiver ausführbar. Die Sende-/Empfangseinrichtung 22 kann wie ein herkömmlicher CAN Transceiver oder CAN FD Transceiver ausgeführt sein.

Mit den beiden Teilnehmerstationen 10, 30 ist eine Bildung und dann Übertragung von Nachrichten 45 mit dem CAN XL Format sowie der Empfang solcher Nachrichten 45 realisierbar.

Fig. 2 zeigt für die Nachricht 45 einen CAN XL Rahmen 450, wie er von der Sende-/Empfangseinrichtung 12 oder der Sende-/Empfangseinrichtung 32 gesendet wird. Der CAN XL-Rahmen 450 ist für die CAN-Kommunikation auf dem Bus 40 in unterschiedliche Kommunikationsphasen 451 bis 455 unterteilt, nämlich eine Arbitrationsphase 451, eine erste Umschaltphase 452, eine Datenphase 453, eine zweite Umschaltphase 454 und eine Rahmenendphase 455.

In der Arbitrationsphase 451 wird beispielsweise am Anfang ein Bit gesendet, das auch SOF-Bit genannt wird und den Beginn des Rahmens bzw. Start of Frame anzeigt. In der Arbitrationsphase 451 wird außerdem ein Identifizierer mit beispielsweise 11 Bit zur Identifikation des Senders der Nachricht 45 gesendet. Bei der Arbitration wird mit Hilfe des Identifizierers bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der Umschaltphase 452 und der anschließenden Datenphase 453 einen exklusiven Zugriff auf den Bus 40 des Bussystems 1 bekommt.

In der ersten Umschaltphase 452 wird bei dem vorliegenden Ausführungsbeispiel die Umschaltung von der Arbitrationsphase 451 in die Datenphase 453 vorbereitet. Die Umschaltphase 452 kann ein Bit haben, das die Bitdauer T_B1 eines Bits der Arbitrationsphase 451 hat und mindestens teilweise mit dem Physical Layer der Arbitrationsphase 451 gesendet wird. Die erste Umschaltphase 452 gehört logisch zur Arbitrationsphase 451. Insbesondere wird in dieser Umschaltphase 452 der Sende-/Empfangseinrichtung 12, 32 signalisiert, dass die Einrichtung 12, 32 in einen anderen Modus bzw. Betriebsart wechseln soll, nämlich in den Physical Layer der Datenphase 453.

In der Datenphase 453 werden die Bits des Rahmens 450 mit dem Physical Layer der Datenphase 453 und mit einer Bitdauer T_B2 gesendet, die kürzer als die Bitdauer T_B1 eines Bits der Arbitrationsphase 451 ist. In der Datenphase 453 werden unter anderem die Nutzdaten des CAN XL-Rahmens 450 bzw. der Nachricht 45 gesendet. Die Nutzdaten können auch als Datenfeld der Nachricht 45 bezeichnet werden. Hierfür kann in der Datenphase 453, nach einem Datenfeld-Identifizierer, der den Typ des Inhaltes im Datenfeld identifiziert, ein beispielsweise 11 Bit langer Datenlängencode (Data-Length-Code) gesendet werden. Der Code kann zum Beispiel Werte von 1 bis zu 2048 oder einen sonstigen Wert mit der Schrittweite von 1 annehmen. Der Datenlängencode kann alternativ weniger oder mehr Bit umfassen, so dass der Wertebereich und die Schrittweite andere Werte annehmen können. Anschließend folgen weitere Felder, wie zum Beispiel das Kopf-Prüfsummenfeld. Danach werden die Nutzdaten des CAN XL-Rahmens 450 bzw. der Nachricht 45 gesendet. Am Ende der Datenphase 453 kann beispielsweise in einem Prüfsummenfeld eine Prüfsumme über die Daten der Datenphase 453 sowie der Daten der Arbitrationsphase 451 enthalten sein. Der Sender der Nachricht 45 kann Stuffbits nach jeweils einer vorbestimmten Anzahl von gleichen Bits, insbesondere 10 gleichen Bits, als inverses Bit in den Datenstrom einfügen. Insbesondere ist die Prüfsumme eine Rahmenprüfsumme F_CRC, mit welcher alle relevanten Bits des Rahmens 450 bis zum Prüfsummenfeld abgesichert werden. Stuff bits in der Datenphase 453 werden beispielsweise nicht abgesichert, weil diese Bits den Rahmen 450 selbst absichern und somit zur Fehlerdetektion verwendet werden.

In der zweiten Umschaltphase 454 wird bei dem vorliegenden Ausführungsbeispiel die Umschaltung von der Datenphase 453 in die Rahmenendphase 455 vorbereitet. Dies bedeutet, dass zurück in die Übertragungsbetriebsart gemäß der Arbitrationsphase 451 geschaltet wird. Die Umschaltphase 454 kann ein Bit haben, das die Bitdauer T_B1 eines Bits der Arbitrationsphase 451 hat und mindestens teilweise mit dem Physical Layer der Datenphase 453 gesendet wird. Die zweite Umschaltphase 454 gehört logisch zur Rahmenendphase 455, in welcher dieselbe Übertragungsbetriebsart verwendet wird wie in der Arbitrationsphase 451. Insbesondere wird in dieser zweiten Umschaltphase 454 der Sende-/Empfangseinrichtung 12, 32 signalisiert, dass die Einrichtung 12, 32 in einen anderen Modus bzw. Betriebsart wechseln soll, nämlich in den Physical Layer der Arbitrationsphase 451.

In der Rahmenendphase 455 kann nach zwei Bits AL2, AH2 in einem Endefeld mindestens ein Acknowledge-Bit ACK enthalten sein. Danach kann eine Folge von 7 gleichen Bits folgen, welche das Ende des CAN XL-Rahmens 450 anzeigen. Mit dem mindestens einen Acknowledge-Bit ACK kann ein Empfänger mitteilen, ob er den CAN XL-Rahmen 450 bzw. der Nachricht 45 korrekt empfangen hat oder nicht.

Mindestens in der Arbitrationsphase 451 und der Rahmenendphase 455 wird ein Physical Layer wie bei CAN und CAN-FD verwendet. Zusätzlich kann in den Umschaltphasen 452, 454 zumindest teilweise, also bei der ersten Umschaltphase 452 am Anfang und bei der zweiten Umschaltphase 454 am Ende, ein Physical Layer wie bei CAN und CAN-FD verwendet werden. Der Physical Layer entspricht der Bitübertragungsschicht oder Schicht 1 des bekannten OSI-Modells (Open Systems Interconnection Modell).

Ein wichtiger Punkt während dieser Phasen 451, 455 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können.

Die Arbitration am Anfang eines Rahmens 450 bzw. der Nachricht 45, 46 und das Acknowledgement in der Rahmenendphase 455 des Rahmens 450 bzw. der Nachricht 45, 46 ist nur dann möglich, wenn die Bitdauer oder Bitzeit deutlich mehr als doppelt so lang ist wie die Signal-Laufzeit zwischen zwei beliebigen Teilnehmerstationen 10, 20, 30 des Bussystems 1. Daher wird die Bitrate in der Arbitrationsphase 451, der Rahmenendphase 454 langsamer gewählt als in der Datenphase 453 des Rahmens 450. Insbesondere wird die Bitrate in den Phasen 451, 455 als 500 kbit/s gewählt, woraus eine Bitdauer oder Bitzeit von ca. 2µs folgt, wohingegen die Bitrate in der Datenphase 453 als 5 bis 10 Mbit/s oder mehr gewählt wird, woraus eine Bitzeit von ca. 0,1µs und kürzer folgt. Somit ist die Bitzeit des Signals in den anderen Kommunikationsphasen 451, 452, 454, 455 um mindestens den Faktor 10 größer als die Bitzeit des Signals in der Datenphase 453.

Ein Sender der Nachricht 45, beispielsweise die Teilnehmerstation 10, beginnt ein Senden von Bits der Umschaltphase 452 und der anschließenden Datenphase 453 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat. Der Sender kann entweder nach einem Teil der Umschaltphase 452 auf die schnellere Bitrate und/oder den anderen Physical Layer wechseln oder erst mit dem ersten Bit, also mit dem Beginn, der anschließenden Datenphase 453 auf die schnellere Bitrate und/oder den anderen Physical Layer wechseln.

Ganz allgemein können in dem Bussystem mit CAN XL im Vergleich zu CAN oder CAN FD insbesondere folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate auf etwa 10 Megabit pro Sekunde,
c) Anheben der Größe der Nutzdaten pro Rahmen auf etwa 2kbyte oder auf einen beliebiger Wert.

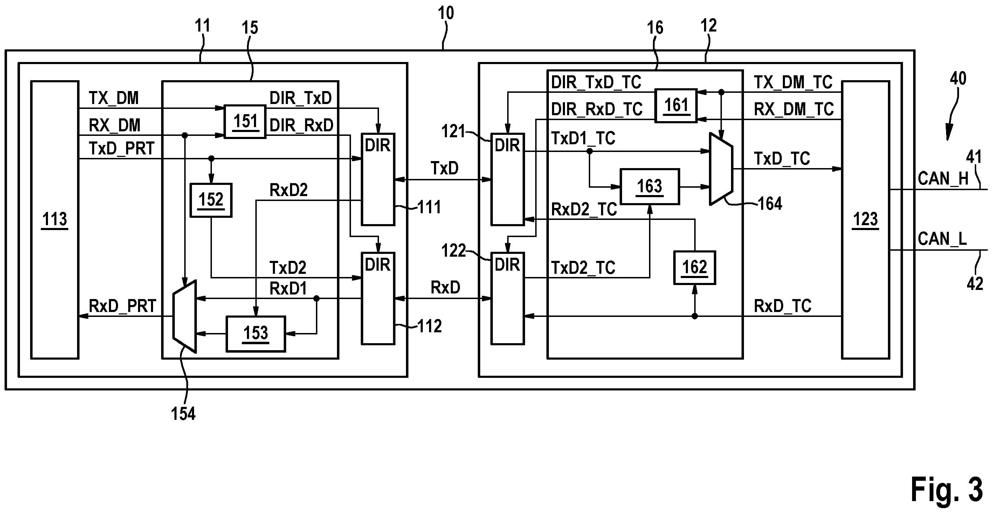

Fig. 3 zeigt den grundlegenden Aufbau der Teilnehmerstation 10 mit der Kommunikationssteuereinrichtung 11, der Sende-/Empfangseinrichtung 12 und den Betriebsartschaltmodulen 15, 16. Das Betriebsartschaltmodul 15 der Kommunikationssteuereinrichtung 11 ist symmetrisch zu dem Betriebsartschaltmodul 16 der Sende-/Empfangseinrichtung 12 aufgebaut. Das Betriebsartschaltmodul 15 kann auch erstes Betriebsartschaltmodul genannt werden. Das Betriebsartschaltmodul 16 kann auch zweites Betriebsartschaltmodul genannt werden.

Die Teilnehmerstation 30 ist in ähnlicher Weise aufgebaut, wie in Fig. 3 gezeigt, außer dass der Block 35 nicht in die Kommunikationssteuereinrichtung 31 integriert ist, sondern separat von der Kommunikationssteuereinrichtung 31 und der Sende-/Empfangseinrichtung 32 vorgesehen ist. Daher werden die Teilnehmerstation 30 und der Block 35 nicht separat beschrieben. Die nachfolgend beschriebenen Funktionen des Betriebsartschaltmoduls 15 sind bei dem Betriebsartschaltmodul 35 identisch vorhanden. Die nachfolgend beschriebenen Funktionen des Betriebsartschaltmoduls 16 sind bei dem Betriebsartschaltmodul 36 identisch vorhanden.

Alternativ oder zusätzlich ist es möglich, dass der Block 16 nicht in die Sende-/Empfangseinrichtung 12 integriert ist, sondern separat von der Kommunikationssteuereinrichtung 11 und der Sende-/Empfangseinrichtung 12 vorgesehen ist.

Die Sende-/Empfangseinrichtung 12 ist an den Bus 40 angeschlossen, genauer gesagt dessen erste Busader 41 für CAN_H und dessen zweite Busader 42 für CAN_L. Im Betrieb des Bussystems 1 setzt die Sende-/Empfangseinrichtung 12 ein Sendesignal TxD der Kommunikationssteuereinrichtung 11 in entsprechende Signale CAN_H und CAN_L für die Busadern 41, 42 um und sendet diese Signale CAN_H und CAN_L auf den Bus 40. Auch wenn hier für die Sende-/Empfangseinrichtung 12 die Signale CAN_H und CAN_L genannt sind, so sind diese in Bezug auf die Nachricht 45 als Signale CAN-XL_H und CAN-XL_L zu verstehen, die in der Datenphase 453 von den herkömmlichen Signalen CAN_H und CAN_L in mindestens einem Merkmal abweichen, insbesondere in Bezug auf die Bildung der Buszustände für die verschiedenen Datenzustände des Signals TxD und/oder in Bezug auf die Spannung bzw. den Physical Layer und/oder die Bitrate.

Auf dem Bus 40 bildet sich ein Differenzsignal VDIFF = CAN_H - CAN_L aus. Mit Ausnahme eines Leerlauf- oder Bereitschaftszustands (Idle oder Standby), hört die Sende-/Empfangseinrichtung 12 mit ihrem Empfänger im Normalbetrieb immer auf eine Übertragung von Daten bzw. Nachrichten 45, 46 auf dem Bus 40 und zwar unabhängig davon, ob die Teilnehmerstation 10 Sender der Nachricht 45 ist oder nicht. Der Sende-/Empfangseinrichtung 12 bildet aus den von dem Bus 40 empfangenen Signalen CAN_H und CAN_L ein Empfangssignal RxD und gibt dieses an die Kommunikationssteuereinrichtung 11 weiter, wie nachfolgend genauer beschrieben.

Der nachfolgend beschriebene Aufbau der Teilnehmerstation 10 stellt eine robuste und einfache Möglichkeit bereit, Bits mittels Signalen zwischen der Kommunikationssteuereinrichtung 11 und der Sende-/Empfangseinrichtung 12 symmetrisch zu übertragen, das heißt ohne dass sich die Bits in ihrer Dauer ändern. Dies ist insbesondere während der Übertragung von Daten während der Datenphase 453 eines Rahmens 450 von großem Vorteil.

Gemäß Fig. 3 hat die Kommunikationssteuereinrichtung 11 zusätzlich zu dem Betriebsartschaltmodul 15 einen ersten bidirektionalen Anschluss 111 für ein digitales Sendesignal TxD, einen zweiten bidirektionalen Anschluss 112 für ein digitales Empfangssignal RxD und ein Kommunikationssteuermodul 113. Die Sende-/Empfangseinrichtung 12 hat zusätzlich zu dem Betriebsartschaltmodul 16 einen ersten bidirektionalen Anschluss 121 für das digitale Sendesignal TxD, einen zweiten bidirektionalen Anschluss 122 für das digitale Empfangssignal RxD, und ein Sende-/Empfangsmodul 123. Die Anschlüsse 111, 112, 121, 122 sind mit Hilfe der Module 15, 16 und entsprechender Signale bidirektional betreibbar, nämlich entweder als Ausgang oder Eingang schaltbar, wie nachfolgend beschrieben.

Die Kommunikationssteuereinrichtung 11 ist als Mikrocontroller ausgestaltet oder weist einen Mikrocontroller auf. Die Kommunikationssteuereinrichtung 11 verarbeitet Signale einer beliebigen Anwendung, beispielsweise eines Steuergeräts für einen Motor, eines Sicherheitssystems für eine Maschine oder ein Fahrzeug, oder sonstige Anwendungen. Nicht gezeigt ist jedoch eine System-ASIC (ASIC = Anwendungsspezifische Integrierte Schaltung), die alternativ ein System Basis-Chip (SBC) sein kann, auf dem mehrere für eine Elektronik-Baugruppe der Teilnehmerstation 10 notwendige Funktionen zusammengefasst sind. In dem System-ASIC können unter anderem die Sende-/Empfangseinrichtung 12 und eine nicht dargestellte Energieversorgungseinrichtung eingebaut sein, welche die Sende-/Empfangseinrichtung 12 mit elektrischer Energie versorgt. Die Energieversorgungseinrichtung liefert üblicherweise eine Spannung CAN_Supply von 5 V. Je nach Bedarf kann die Energieversorgungseinrichtung jedoch eine andere Spannung mit einem anderen Wert liefern und/oder als Stromquelle ausgestaltet sein.

Das Kommunikationssteuermodul 113 ist ein Protokoll-Controller, der das CAN Protokoll implementiert, insbesondere das Protokoll für CAN XL oder CAN FD. Das Kommunikationssteuermodul 113 ist für die Ausgabe folgender Ausgangssignale oder den Empfang folgender Eingangssignale ausgestaltet.

Das Signal TxD_PRT ist ein Ausgangssignal, das dem Sendesignal TxD entspricht. Das Signal RxD_PRT ist ein Eingangssignal, das dem Empfangssignal RxD entspricht.

Zusätzlich zu diesen Signalen ist das Kommunikationssteuermodul 113 ausgestaltet, die folgenden Steuersignale TX_DM, RX_DM zu erzeugen und auszugeben.

Das Steuersignal TX_DM ist ein Ausgangssignal und gibt an, ob die Sende-/Empfangseinrichtung 12 in der Betriebsart TX-DataPhaseMode arbeiten soll oder nicht. Die Betriebsart wird auch FAST_TX Mode oder erste Betriebsart genannt. In der Betriebsart TX-DataPhaseMode hat die Teilnehmerstation 10 die Arbitration in der Arbitrationsphase 451 gewonnen und ist in der darauffolgenden Datenphase 453 Sender des Rahmens 450. Die Teilnehmerstation 10 kann in diesem Fall auch als Sendeknoten bezeichnet werden. In der Betriebsart TX-DataPhaseMode soll die Sende-/Empfangseinrichtung 12 den Physical Layer für die Datenphase 453 verwenden und dabei die Busadern CAN_H und CAN_L treiben.

Das Steuersignal RX_DM ist ein Ausgangssignal und gibt an, ob die Sende-/Empfangseinrichtung 12 in der Betriebsart RX-DataPhaseMode arbeiten soll oder nicht. Die Betriebsart wird auch FAST_RX Mode oder zweite Betriebsart genannt. In der Betriebsart RX-DataPhaseMode hat die Teilnehmerstation 10 die Arbitration in der Arbitrationsphase 451 verloren und ist in der darauffolgenden Datenphase 453 nur Empfänger, also kein Sender, des Rahmens 450. Die Teilnehmerstation 10 kann in diesem Fall auch als Empfangsknoten bezeichnet werden. In der Betriebsart RX-DataPhaseMode soll die Sende-/Empfangseinrichtung 12 den Physical Layer für die Datenphase 453 verwenden, jedoch die Busadern CAN_H und CAN_L nicht treiben.

Wenn die Sende-/Empfangseinrichtung weder im TX-DataPhaseMode noch in dem RX-DataPhaseMode ist, so befindet sie sich sogenannten ArbitrationPhaseMode, also dem Modus, der in der Arbitrationsphase 451 und der Rahmenendphase 455 verwendet wird. In diesem Modus wird der Physical Layer verwendet, mit dem dominante und rezessive Buszustände gesendet werden können.

Die Schaltung zur Signalisierung der einzuschaltenden Betriebsart an die Sende-/Empfangseinrichtung 12 ist hier nicht dargestellt. Die Signalisierung erfolgt insbesondere ebenfalls über den TxD-Anschluss 111 und/oder RxD-Anschluss 112.

Das Betriebsartschaltmodul 15 hat einen Richtungssteuerblock 151, einen Codierblock 152, einen Decodierblock 153 und einen Multiplexer 154. Das erste Betriebsartschaltmodul 15 empfängt die zuvor genannten Signale, welche das Kommunikationssteuermodul 113 ausgibt.

Der Richtungssteuerblock 151 erzeugt aus den Steuersignalen TX_DM, RX_DM des Kommunikationssteuermoduls 113 die Schaltsignale DIR_TxD und DIR_RxD. Das Schaltsignal DIR_TxD steuert die Richtung DIR, genauer Übertragungsrichtung, des ersten bidirektional schaltbaren Anschlusses 111 der Kommunikationssteuereinrichtung 11. Mit anderen Worten, das Schaltsignal DIR_TxD steuert die Richtung des TxD-Anschlusses 111 der Einrichtung 11. Das Schaltsignal DIR_RxD steuert die Richtung DIR, genauer Übertragungsrichtung, des zweiten bidirektional schaltbaren Anschlusses 112 der Kommunikationssteuereinrichtung 11. Mit anderen Worten, das Schaltsignal DIR_RxD steuert die Richtung des RxD-Anschlusses 112 der Einrichtung 11.

Hierbei gilt, ist das Signal TX_DM gesetzt, insbesondere ist sein Signalwert gleich 1, so ist die Richtung des TxD-Anschlusses 111 und ist die Richtung des RxD-Anschlusses 112 auf Ausgang geschaltet. Als Folge davon kann das Kommunikationssteuermodul 113 einen auf den Bus 40 zu sendenden Rahmen 450 als differentielles Signal über die Anschlüsse 111, 112 senden, wie nachfolgend genauer beschrieben. Insbesondere gilt, sendet das Kommunikationssteuermodul 113 einen Rahmen 450 und ist dabei das Signal TX_DM gesetzt, so ist die Richtung des TxD-Anschlusses 111 und die Richtung des RxD-Anschlusses 112 auf Ausgang geschaltet.

Ist das Signal RX_DM gesetzt, insbesondere ist sein Signalwert gleich 1, so ist die Richtung des TxD-Anschlusses 111 und die Richtung des RxD-Anschlusses 112 auf Eingang geschaltet. Als Folge davon kann das Kommunikationssteuermodul 113 einen über den Bus 40 gesendeten Rahmen 450 als differentielles Signal über die Anschlüsse 111, 112 empfangen, wie nachfolgend genauer beschrieben. Insbesondere gilt, empfängt das Kommunikationssteuermodul 113 einen Rahmen 450 und ist dabei das Signal RX_DM gesetzt, so ist die Richtung des TxD-Anschlusses 111 und die Richtung des RxD-Anschlusses 112 auf Eingang geschaltet.

Der Codierblock 152 erzeugt aus dem Signal TxD_PRT, also dem Sendesignal TxD, ein Signal TxD2. Das Signal TxD2 ist ein inverses Signal zu dem Signal TxD_PRT. Der Codierblock 152 gibt das Signal TxD2 an den Anschluss 112 aus. Sind die Anschlüsse 111, 112 auf Ausgang geschaltet, wie zuvor beschrieben, kann die Kommunikationssteuereinrichtung 11 über die Anschlüsse 111, 112 die Signale TxD_PRT, TxD2 als ein differentielles Ausgangssignal an die Sende-/Empfangseinrichtung 12 ausgeben. Im einfachsten Fall ist der Codierblock 152 ein Inverter, der das Signal TxD_PRT invertiert.

Der Decodierblock 153 ist an seinem Eingang mit den Anschlüssen 111, 112 verbunden. Sind die Anschlüsse 111, 112 auf Eingang geschaltet, wie zuvor beschrieben, empfängt der Decodierblock 153 von den Anschlüssen 111, 112 ein differentielles Eingangssignal, das aus einem Signal RxD1 und einem Signal RxD2 besteht. Der Decodierblock 153 decodiert die Signale RxD1, RxD2 zu dem nicht-differentiellen Signal RxD_PRT. Der Decodierblock 153 gibt das Signal RxD_PRT an den Multiplexer 154 aus.

Das Kommunikationssteuermodul 113 steuert den Multiplexer 154 mit dem Steuersignal RX_DM an. Je nach Signalwert des Steuersignals RX_DM wird ausgewählt, ob dem Kommunikationssteuermodul 113 das von dem Decodierblock 153 decodierte Signal oder das Signal RxD1 von dem Anschluss 112 als Signal RxD_PRT bereitgestellt wird.

Bei der Sende-/Empfangseinrichtung 12 ist das Sende-/Empfangsmodul 123 zum Senden und/oder Empfangen von Nachrichten 45, 46 gemäß dem CAN Protokoll ausgestaltet, insbesondere von Nachrichten gemäß dem Protokoll für CAN XL oder CAN FD, wie zuvor beschrieben. Das Sende-/Empfangsmodul 123 führt die Anbindung an das physikalische Medium durch, also den Bus 40 mit den Busadern 41, 42. Das Sende-/Empfangsmodul 123 treibt und decodiert die Signale CAN_H und CAN_L für die Busadern 41, 42 bzw. den Bus 40. Das Sende-/Empfangsmodul 123 ist zudem für die Ausgabe folgender Ausgangssignale oder den Empfang folgender Eingangssignale ausgestaltet.

Das Signal RxD_TC ist ein Ausgangssignal, das einem digitalen Empfangssignal entspricht, welches das Sende-Empfangsmodul 123 aus dem differentiellen Signal CAN_H, CAN_L vom Bus 40 erzeugt. Das Signal TxD_TC ist ein Eingangssignal, das dem Sendesignal TxD entspricht, also dem Signal, welches von dem Kommunikationssteuermodul 113 zum Senden auf den Bus 40 erzeugt wurde.

Zusätzlich zu diesen Signalen ist das Sende-/Empfangsmodul 123 ausgestaltet, die folgenden Steuersignale TX_DM_TC, RX_DM_TC zu erzeugen und auszugeben.

Das Steuersignal TX_DM_TC ist ein Ausgangssignal und gibt an, ob die Sende-/Empfangseinrichtung 12 in der Betriebsart TX-DataPhaseMode arbeitet bzw. geschaltet ist oder nicht, um in der Datenphase 453 als Sender des Rahmens 450 zu agieren, wie zuvor beschrieben. Dies ist eine Betriebsart, in der das Sende-/Empfangsmodul 123 in der Datenphase 453 Bits auf dem Bus 40 sendet, also den Bus 40 treibt.

Das Steuersignal RX_DM_TC ist ein Ausgangssignal und gibt an, ob die Sende-/Empfangseinrichtung 12 in der Betriebsart RX-DataPhaseMode arbeitet bzw. geschaltet ist oder nicht, um in der Datenphase 453 nur als Empfänger, also nicht als Sender, des Rahmens 450 zu agieren, wie zuvor beschrieben. Dies ist eine Betriebsart, in der das Sende-/Empfangsmodul 123 in der Datenphase 453 Bits nur von dem Bus 40 empfängt, also den Bus 40 nicht treibt.

Das zweite Betriebsartschaltmodul 16 hat einen Richtungssteuerblock 161, einen Codierblock 162, einen Decodierblock 163 und einen Multiplexer 164. Das zweite Betriebsartschaltmodul 16 empfängt die zuvor genannten Signale, welche das Sende-/Empfangsmodul 123 ausgibt.

Der Richtungssteuerblock 161 erzeugt aus den Steuersignalen TX_DM_TC, RX_DM_TC des Sende-/Empfangsmoduls 123 die Schaltsignale DIR_TxD_TC und DIR_RxD_TC. Das Schaltsignal DIR_TxD_TC steuert die Richtung DIR, genauer Übertragungsrichtung, des ersten bidirektional schaltbaren Anschlusses 121 der Sende-/Empfangseinrichtung 12. Mit anderen Worten, das Schaltsignal DIR_TxD_TC steuert die Richtung des TxD-Anschlusses 121 der Einrichtung 12. Das Schaltsignal DIR_RxD_TC steuert die Richtung DIR, genauer Übertragungsrichtung, des zweiten bidirektional schaltbaren Anschlusses 122 der Sende-/Empfangseinrichtung 12. Mit anderen Worten, das Schaltsignal DIR_RxD_TC steuert die Richtung des RxD-Anschlusses 122 der Einrichtung 12.

Hierbei gilt, ist das Signal RX_DM_TC gesetzt, insbesondere ist sein Signalwert gleich 1, so ist die Richtung des TxD-Anschlusses 121 und die Richtung des RxD-Anschlusses 122 auf Ausgang geschaltet. Als Folge davon kann das Sende-/Empfangsmodul 123 einen von einer anderen Teilnehmerstation über den Bus 40 gesendeten Rahmen 450 als differentielles Signal über die Anschlüsse 121, 122 an die Kommunikationssteuereinrichtung 11 senden, wie nachfolgend genauer beschrieben. Insbesondere gilt, empfängt das Sende-/Empfangsmodul 123 einen Rahmen 450 und ist dabei das Signal RX_DM_TC gesetzt, so ist die Richtung des TxD-Anschlusses 121 und ist die Richtung des RxD-Anschlusses 122 auf Ausgang geschaltet.

Ist das Signal TX_DM_TC gesetzt, insbesondere ist sein Signalwert gleich 1, so ist die Richtung des TxD-Anschlusses 121 und ist die Richtung des RxD-Anschlusses 122 auf Eingang geschaltet. Als Folge davon kann das Sende-/Empfangsmodul 123 einen auf den Bus 40 zu sendenden Rahmen 450 als differentielles Signal über ihre Anschlüsse 121, 122 von der Kommunikationssteuereinrichtung 11 empfangen. Insbesondere gilt, sendet das Sende-/Empfangsmodul 123 einen Rahmen 450 auf den Bus 40 und ist dabei das Signal TX_DM_TC gesetzt, so ist die Richtung des TxD-Anschlusses 121 und die Richtung des RxD-Anschlusses 122 auf Eingang geschaltet.

Der Codierblock 162 erzeugt aus dem Signal RxD_TC, also dem Empfangssignal RxD, ein Signal RxD2_TC. Das Signal RxD2_TC ist ein inverses Signal zu dem Signal RxD_TC. Der Codierblock 162 gibt das Signal RxD2_TC an den Anschluss 121 aus. Sind die Anschlüsse 121, 122 auf Ausgang geschaltet, wie zuvor beschrieben, kann die Sende-/Empfangseinrichtung 12 über die Anschlüsse 121, 122 die Signale RxD2_TC, RxD_TC als ein differentielles Ausgangssignal an die Kommunikationssteuereinrichtung 11 ausgeben. Im einfachsten Fall ist der Codierblock 162 ein Inverter, der das Signal RxD_TC invertiert.

Der Decodierblock 163 ist an seinem Eingang mit den Anschlüssen 121, 122 verbunden. Sind die Anschlüsse 121, 122 auf Eingang geschaltet, wie zuvor beschrieben, empfängt der Decodierblock 163 von den Anschlüssen 121, 122 ein differentielles Eingangssignal, das aus einem Signal TxD1_TC und einem Signal TxD2_TC besteht. Der Decodierblock 163 decodiert die Signale TxD1_TC, TxD2_TC zu dem nicht-differentiellen Signal TxD_TC. Der Decodierblock 163 gibt das Signal TxD_TC an den Multiplexer 154 aus.

Das Sende-/Empfangsmodul 123 steuert den Multiplexer 164 mit dem Steuersignal TX_DM_TC an. Je nach Signalwert des Steuersignals TX_DM_TC wird ausgewählt, ob dem Sende-/Empfangsmodul 123 das von dem Decodierblock 163 decodierte Signal oder das Signal TxD1_TC von dem Anschluss 121 als Signal TxD_TC bereitgestellt wird.

Demzufolge sendet die Kommunikationssteuereinrichtung 11 in der Betriebsart TX-DataPhaseMode, wie zuvor beschrieben, den Bitstrom des seriellen Sendesignals TxD als differentielles Signal über die TxD- und RxD-Anschlüsse 111, 112. Die Sende-/Empfangseinrichtung 12 empfängt dieses differentielle Signal an ihren TxD- und RxD-Anschlüssen 121, 122 und decodiert dieses differentielle Signal zu einem nicht-differentiellen Signal TxD_TC.

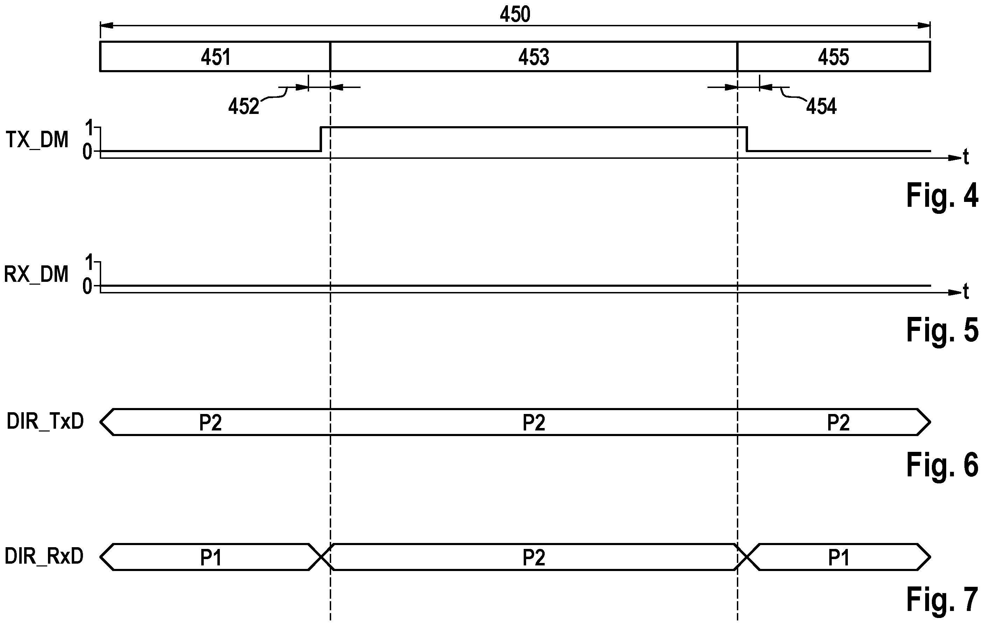

Fig. 4 bis Fig. 7 zeigen ein Beispiel für die Signalverläufe der zuvor beschriebenen Signale in der Kommunikationssteuereinrichtung 11, wenn die Teilnehmerstation 10 Sender der Nachricht 45 ist und somit die Sende-/Empfangseinrichtung 12 in der Datenphase 453 in die Betriebsart TX-DataPhaseMode geschaltet ist. Hierbei steht in Fig. 6 und Fig. 7 die Bezeichnung "P1" für Eingang und die Bezeichnung "P2" für Ausgang.

Gemäß Fig. 4 bis Fig. 7 verwenden die Kommunikationssteuereinrichtung 11 und die Sende-/Empfangseinrichtung 12 zur Übertragung der Daten während der Arbitrationsphase 451 die Anschlüsse 111, 112, 121, 122 der Teilnehmerstation 10 wie gewohnt. Die Kommunikationssteuereinrichtung 11 sendet mittels des TxD-Anschlusses 111 und empfängt zeitgleich mittels des RxD-Anschlusses 112 die Daten vom Bus 40.

In der schnelleren Betriebsart der Sende-/Empfangseinrichtung 12 sendet die Teilnehmerstation 10 als Sendeknoten ausschließlich, wie in Fig. 4 bis Fig. 7 gezeigt.

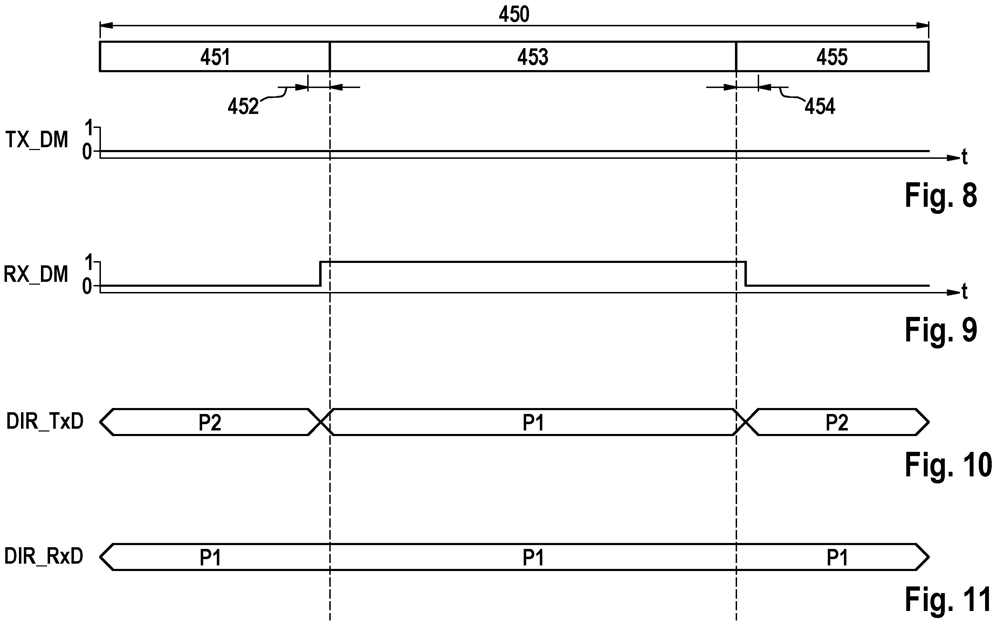

Außerdem gilt, dass die Teilnehmerstation 10 als Empfangsknoten in der schnelleren Betriebsart der Sende-/Empfangseinrichtung 12 ausschließlich empfängt, wie in Fig. 8 bis Fig. 11 gezeigt. Fig. 8 bis Fig. 11 zeigen ein Beispiel für die Signalverläufe der zuvor beschriebenen Signale in der Kommunikationssteuereinrichtung 11, wenn die Teilnehmerstation 10 kein Sender der Nachricht ist und somit die Sende-/Empfangseinrichtung 12 in die Betriebsart RX-DataPhaseMode geschaltet ist. Hierbei steht auch in Fig. 10 und Fig. 11 die Bezeichnung "P1" für Eingang und die Bezeichnung "P2" für Ausgang. Demzufolge sendet die Sende-/Empfangseinrichtung 12 in der Betriebsart RX-DataPhaseMode, wie zuvor beschrieben, den Bitstrom des seriellen Empfangssignals RxD als differentielles Signal über die TxD- und RxD-Anschlüsse 121, 122. Die Kommunikationssteuereinrichtung 11 empfängt dieses differentielle Signal an ihren TxD- und RxD-Anschlüssen 111, 112 und decodiert dieses differentielle Signal zu dem nicht-differentiellen Signal RxD_PRT. Außerdem erfolgt die Übertragung der Daten während der Arbitrationsphase 451 und Rahmenendphase 455 über die Anschlüsse 111, 112, 121, 122, wie zuvor für Fig. 4 bis Fig. 7 beschrieben.

Im Unterschied zu den Phasen 451, 455 eines Rahmens 450 und zu CAN FD, ist somit bei den Teilnehmerstationen 10, 30 in der Datenphase 453 das gleichzeitige Senden und Empfangen auf dem CAN Bus 40 in den Betriebsarten RX-DataPhaseMode, TX-DataPhaseMode der Sende-/Empfangseinrichtung 12 nicht mehr notwendig. Dabei verwenden die Kommunikationssteuereinrichtung 11 und die Sende-/Empfangseinrichtung 12 in der Zeit, in der die Sende-/Empfangseinrichtung 12 in einer Betriebsart der Datenphase 453 ist, die beiden Anschlüsse 111, 112, 121, 122 für die Signale RxD, TxD in der gleichen Richtung, um ein differentielles Sendesignal TxD (erste Betriebsart der Datenphase 453) oder ein differentielles Empfangssignal RxD (zweite Betriebsart der Datenphase 453) zu übertragen.

Gemäß einer ersten Modifikation der zuvor genannten Ausgestaltung der Module 15, 16 ist es möglich, dass mindestens eines der Module 15, 16 nur eine Schaltung in die Betriebsart TX-DataPhaseMode ermöglicht. Eine solche Variante kann beispielsweise bei einer Teilnehmerstation 10, 20 des Bussystems 1 vorteilhaft sein, die selbst nur Signale senden muss, jedoch keine Signale vom Bus 40 empfangen muss, um ihre Funktion auszuführen. Beispiel für die Ausgestaltung einer solchen Teilnehmerstation ist ein reines Steuerglied, dessen Steuerung zwar über den Bus 40 übertragen wird, jedoch das Ereignis für die Steuerung unabhängig von der Kommunikation am Bus empfängt oder erzeugt.

Gemäß einer zweiten Modifikation der zuvor genannten Ausgestaltung der Module 15, 16 ist es möglich, dass mindestens eines der Module 15, 16 nur eine Schaltung in die Betriebsart RX-DataPhaseMode ermöglicht. Eine solche Variante kann beispielsweise bei einer Teilnehmerstation 10, 20 des Bussystems 1 vorteilhaft sein, die selbst keine Signale senden muss, sondern nur Signale vom Bus 40 empfangen muss, um ihre Funktion auszuführen. Beispiel für die Ausgestaltung einer solchen Teilnehmerstation ist ein Geber, insbesondere Drehgeber, Stellglied usw..

Selbstverständlich sind die zuvor beschriebenen Funktionen der Einrichtungen 11, 12 auch für eine andere Modifikation von CAN FD und/oder CAN, zumindest für das Senden der Nutzdaten, verwendbar.

Als Folge der Ausgestaltung der Teilnehmerstation 10 ist keine galvanische Verbindung durch jeweils einen zusätzlichen Anschluss an der Kommunikationssteuereinrichtung 11 und der damit verbundenen Sende-/Empfangseinrichtung 12 erforderlich, damit die Symmetrie der Datenübertragung zwischen den Einrichtungen 11, 12 gewährleistet werden kann. Das heißt, es ist vorteilhaft kein zusätzlicher Anschluss erforderlich, der an einem Standardgehäuse der Einrichtungen 11, 12 nicht verfügbar ist. Ein Wechsel auf ein anderes, größeres und kostenintensives, Gehäuse ist somit nicht notwendig, um einen zusätzlichen Anschluss bereitzustellen.

Durch die beschriebene Ausgestaltung der Einrichtung(en) 11, 12, 32, 35 können in der Datenphase 453 weit höhere Datenraten als mit CAN oder CAN-FD erreicht werden. Zudem kann die Datenlänge in dem Datenfeld der Datenphase 453 beliebig gewählt werden, wie zuvor beschrieben. Dadurch können die Vorteile von CAN in Bezug auf die Arbitrierung beibehalten und dennoch eine größere Anzahl von Daten in kürzerer Zeit als bisher sehr sicher und damit effektiv übertragen werden.

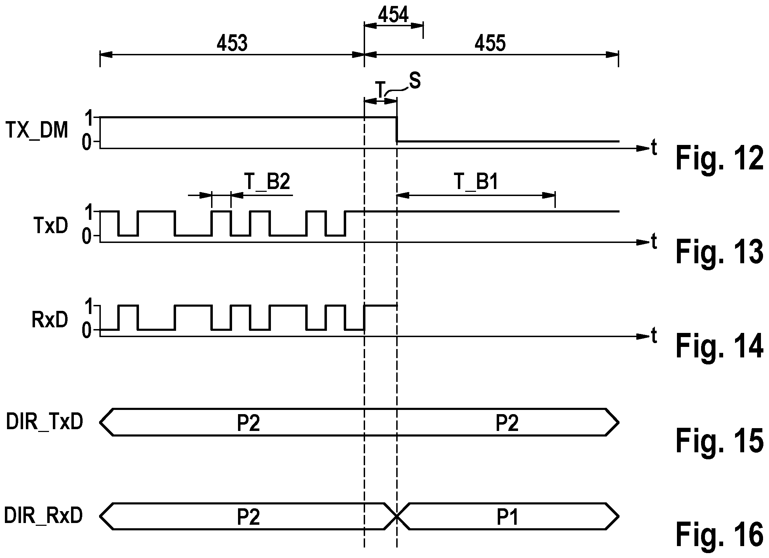

Fig. 12 bis Fig. 16 zeigen Signalverläufe bei der Teilnehmerstation 10 bei einem zweiten Ausführungsbeispiel. Hierbei ist der Übergang zwischen der Datenphase 453 und der Rahmenendphase 455 gezeigt, wenn die Teilnehmerstation 10 Sender des Rahmens 450 ist. In der Rahmenendphase 455 entspricht die Übertragungsbetriebsart der Arbitrationsphase 451. Gemäß Fig. 15 sendet die Kommunikationssteuereinrichtung 11 in der Rahmenendphase 455 mittels des TxD-Anschlusses 111, so dass der Anschluss 111 auf Ausgang (Bezeichnung P2) gestellt ist, und empfängt zeitgleich mittels des RxD-Anschlusses 112 die Daten vom Bus 40, so dass der Anschluss 111 auf Eingang (Bezeichnung P1) gestellt ist, wie in Fig. 16 gezeigt.

Während der Betriebsart TX-DataPhaseMode in der Datenphase 453 verwendet die Kommunikationssteuereinrichtung 11 jedoch ihre beiden Anschlüsse 111, 112 als Ausgang (Bezeichnung P2) in Fig. 15 und Fig. 16) und die Sende-/Empfangseinrichtung 12 verwendet ihre beiden Anschlüsse 121, 122 als Eingang (Bezeichnung P1). Dadurch wird in der Datenphase 453 von den Anschlüssen 111, 112 ein differentielles Signal TxD_PRT, TxD2 zu den Anschlüssen 121, 122 übertragen, die in Fig. 13 und Fig. 14 als TxD, RxD bezeichnet sind. Das Signal TxD gemäß Fig. 13 an dem Anschluss 111 hat Bits mit einer Bitdauer T_B2. Das Signal RxD gemäß Fig. 14 an dem Anschluss 112 hat ebenfalls Bits mit der Bitdauer T_B2, da es ja dem inversen TxD Signal entspricht.

Soll von der Betriebsart TX-DataPhaseMode in der Datenphase 453 in die Betriebsart der Arbitrationsphase 451, dem ArbitrationPhaseMode, umgeschaltet werden, in der die Signale TxD, RxD mit einer Bitdauer T_B1 gesendet werden (Fig. 13), ist das Betriebsartschaltmodul 15 ausgestaltet, zur Signalisierung der Umschaltung ein nicht-differentielles Signal über ihre beiden Anschlüsse 111, 112 zu senden, wie in Fig. 13 und Fig. 14 gezeigt. Beispielsweise sendet das Betriebsartschaltmodul 15 dafür in der Umschaltphase 454 für eine vorbestimmte Zeitdauer T als Signalisierung S die Signale TxD=RxD=1 über ihre beiden Anschlüsse 111, 112, wie in Fig. 13 und Fig. 14 gezeigt. Die vorbestimmte Zeitdauer T ist mindestens beispielsweise T=100 ns. Daran kann die Sende-/Empfangseinrichtung 12 erkennen, dass die Sende-/Empfangseinrichtung 12 ihre Betriebsart nun in die Betriebsart der Arbitrationsphase 451 schalten soll.

In dem zuvor beschriebenen Beispiel erfolgt die Signalisierung S zur Umschaltung, während der CAN-Bus 40 auf dem Pegel "Data-1" bzw. "recessive" ist. Daher entsteht kein Konflikt bzw. Kurzschluss am RxD-Anschluss 112, 122, wenn die Sende-/Empfangseinrichtung 12 beginnt, die RxD-Leitung zwischen der Sende-/Empfangseinrichtung 12 und der Kommunikationssteuereinrichtung 11 zu treiben. Falls die Signalisierung S zur Umschaltung der Betriebsart der Sende-/Empfangseinrichtung 12 bei dem inversen Pegel auf dem CAN-Bus 40 erfolgen soll, ist die Kommunikationssteuereinrichtung 11 ausgestaltet, die Signalisierung S zur Umschaltung durch Senden der Pegel TxD=RxD=0 vorzunehmen.

Im Unterschied zu der Umschaltung zur Rahmenendphase 455 kann bei dem vorliegenden Ausführungsbeispiel eine Signalisierung der Betriebsartwechsel von der Arbitrationsphase 451 in die Datenphase 453, also in eine der Betriebsarten RX-DataPhaseMode, TX-DataPhaseMode der Sende-/Empfangseinrichtung 12, über den RxD-Anschluss 112 erfolgen. Hierfür treibt die Kommunikationssteuereinrichtung 11 für kurze Zeit den RxD-Anschluss 112 zum Zweck der Signalisierung des Betriebsartwechsels stärker als die Sende-/Empfangseinrichtung 12 ihren RxD-Anschluss 122 treibt. Dadurch ist vermieden, dass der Wert der RxD-Leitung unbestimmt sein könnte, wenn sowohl die Kommunikationssteuereinrichtung 11 ihren RxD-Anschluss 112 als auch die Sende-/Empfangseinrichtung 12 ihren RxD-Anschluss 122 treibt und es zu einer Überlagerung der beiden Signal-Quellen an den Anschlüssen 112, 122 kommt. Bei einer solchen Überlagerung der beiden Signal-Quellen an den Anschlüssen 112, 122 setzt sich somit immer die Kommunikationssteuereinrichtung 11 durch. Dadurch ist der Wert der RxD-Leitung immer bestimmt.

Auch das zweite Ausführungsbeispiel hat damit den Vorteil, dass kein weiterer Anschluss bzw. Pin bzw. Port für die Einrichtungen 11, 12 notwendig ist und somit die Lösung sehr kostengünstig ist.

Ansonsten kann die Kommunikation in den Teilnehmerstation 10, 30 und in dem Bussystem 1 erfolgen, wie in Bezug auf das erste Ausführungsbeispiel beschrieben.

Gemäß einem dritten Ausführungsbeispiel kann die Sende-Empfangseinrichtung 12 und/oder die Sende-Empfangseinrichtung 32, insbesondere das Betriebsartumschaltmodul 15 und/oder das Betriebsartumschaltmodul 16, ausgestaltet sein, beim Empfang in der Betriebsart RX-DataPhaseMode der Kommunikationssteuereinrichtung 11, insbesondere dem Kommunikationssteuermodul 113, etwas zu signalisieren. Dazu sendet die Sende-Empfangseinrichtung 12, 32 in einer zusätzlichen Betriebsart der Datenphase 453 ein nicht-differentielles Signal über die TxD- und RxD-Anschlüsse 121, 122, wie in Bezug auf das zweite Ausführungsbeispiel für die Anschlüsse 111, 112 beschrieben. Beispielsweise kann die Sende-Empfangseinrichtung 12, 32 an den Anschlüssen 121, 122 als Signalisierung S die folgenden Pegel senden: TxD=RxD=1.

Die Signalisierung S der Sende-Empfangseinrichtungen 12, 32 kann Zusatzinformationen enthalten oder sein, die zusätzlich zu Informationen der Signale sind, die in dem Bussystem 1 mit den Nachrichten 45, 46 zwischen Teilnehmerstationen 10, 30 des Bussystems 1 ausgetauscht werden. Die Zusatzinformationen ermöglichen eine interne Kommunikation der Einrichtungen 11, 12 oder der Einrichtungen 31, 32.

Ansonsten kann die Kommunikation in den Teilnehmerstation 10, 30 und in dem Bussystem 1 erfolgen, wie in Bezug auf das erste oder zweite Ausführungsbeispiel beschrieben.

Alle zuvor beschriebenen Ausgestaltungen der Einrichtungen 11, 12, 31, 32, der Module 15, 16, 35, 36, der Teilnehmerstationen 10, 20, 30, des Bussystems 1 und des darin ausgeführten Verfahrens können einzeln oder in allen möglichen Kombinationen gemäß den Ansprüchen Verwendung finden.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Schnittstellen verwendbar, welche für verschiedene Kommunikationsphasen ein Umschaltsignal von einem Protocol-Controller bzw. Modul 113 benötigen und/oder dabei einen Datenaustausch zwischen Einrichtungen 11, 12 benötigen.

Das zuvor beschriebene Bussystem 1 gemäß den Ausführungsbeispielen ist anhand eines auf dem CAN-Protokoll basierenden Bussystems beschrieben. Das Bussystem 1 gemäß den Ausführungsbeispielen kann jedoch auch eine andere Art von Kommunikationsnetz sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist. Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

## Patentansprüche

1. Kommunikationssteuereinrichtung (11) für eine Teilnehmerstation (10) eines seriellen Bussystems (1), mit
einem Kommunikationssteuermodul (113) zum Erzeugen eines Sendesignals (TxD_PRT) zum Steuern einer Kommunikation der Teilnehmerstation (10) mit mindestens einer anderen Teilnehmerstation (10; 20; 30) des Bussystems (1), bei welchem Bussystem (1) zum Austausch von Nachrichten (45; 46) zwischen Teilnehmerstationen (10, 20, 30) des Bussystems (1) in einem Rahmen (450) für eine Nachricht (45; 46) mindestens eine erste Kommunikationsphase (451, 452, 454, 455) und eine zweite Kommunikationsphase (453) verwendet werden,
einem ersten Anschluss (111) zum Senden, in einer Betriebsart der ersten Kommunikationsphase (451, 452, 454, 455) eines Rahmens (450), des Sendesignals (TxD_PRT) an eine Sende-/Empfangseinrichtung (12; 32), die zum Senden des Sendesignals (TxD) auf einen Bus (40) des Bussystems (1) ausgestaltet ist,
einem zweiten Anschluss (122) zum Empfangen, in der Betriebsart der ersten Kommunikationsphase (451, 452, 454, 455) des Rahmens (450), eines digitalen Empfangssignals (RxD) von der Sende-/Empfangseinrichtung (12; 32), und
einem Betriebsartschaltmodul (15) zum Schalten der Übertragungsrichtung des ersten und zweiten Anschlusses (111, 112) in der zweiten Kommunikationsphase (453) des Rahmens (450) in die gleiche Richtung für eine differentielle Signalübertragung über den ersten und zweiten Anschluss (111, 112).

2. Kommunikationssteuereinrichtung (11) nach Anspruch 1,
wobei das Betriebsartschaltmodul (15) ausgestaltet ist, in einer ersten Betriebsart der zweiten Kommunikationsphase (453) den ersten und zweiten Anschluss (111, 112) als Ausgang zu schalten und aus dem Sendesignal (TxD_PRT) ein inverses digitales Sendesignal (TxD2) zu erzeugen sowie das Sendesignal (TxD_PRT) an dem ersten Anschluss (111) und das dazu inverse digitale Sendesignal (TxD2) an dem zweiten Anschluss (112) auszugeben, und/oder
wobei das Betriebsartschaltmodul (15) ausgestaltet ist, in einer zweiten Betriebsart der zweiten Kommunikationsphase (453) den ersten und zweiten Anschluss (111, 112) als Eingang zu schalten und aus dem an dem ersten und zweiten Anschluss (111, 112) empfangenen differentiellen Empfangssignal (RxD1,RxD2) ein nicht-differentielles Empfangssignal (RxD_PRT) zu erzeugen und an das Kommunikationssteuermodul (113) auszugeben.

3. Kommunikationssteuereinrichtung (11) nach Anspruch 1 oder 2, wobei das Betriebsartschaltmodul (15) ausgestaltet ist, in der ersten Betriebsart der zweiten Kommunikationsphase (453) an den beiden Anschlüssen (111, 112) für eine vorbestimmte Zeitdauer (T) die beiden Sendesignale (TxD_PRT, TxD2) mit demselben Pegel zu erzeugen und auszugeben, um der Sende-Empfangseinrichtung (12) zu signalisieren, dass die Betriebsart der Sende-Empfangseinrichtung (12) von der ersten Betriebsart der zweiten Kommunikationsphase (453) in die Betriebsart der ersten Kommunikationsphase (451, 452, 454, 455) zu schalten ist.

4. Kommunikationssteuereinrichtung (11) nach einem der vorangehenden Ansprüche, wobei das Betriebsartschaltmodul (15) ausgestaltet ist, der Sende-Empfangseinrichtung (12) über den ersten oder zweiten Anschluss (111; 112) zu signalisieren, dass die Sende-Empfangseinrichtung (12) ihre Betriebsart von der Betriebsart der ersten Kommunikationsphase (451, 452, 454, 455) in eine vorbestimmte Betriebsart der zweiten Kommunikationsphase (453) zu schalten hat.

5. Kommunikationssteuereinrichtung (11) nach einem der vorangehenden Ansprüche, wobei das Kommunikationssteuermodul (113) ausgestaltet ist, das Sendesignal (TxD_PRT) in der ersten Kommunikationsphase (451, 452, 454, 455) mit Bits mit einer ersten Bitzeit (T_B1) zu erzeugen, die um mindestens den Faktor 10 größer als eine zweite Bitzeit (T_B2) von Bits ist, die das Kommunikationssteuermodul (113) in der zweiten Kommunikationsphase (453) in dem Sendesignal (TxD_PRT) erzeugt.

6. Sende-/Empfangseinrichtung (12; 32) für eine Teilnehmerstation (10; 30) eines seriellen Bussystems (1), mit
einem Sende-/Empfangsmodul (123) zum Senden eines Sendesignals (TxD_TC) auf einen Bus (40) des Bussystems (1), bei welchem Bussystem (1) zum Austausch von Nachrichten (45; 46) zwischen Teilnehmerstationen (10, 20, 30) des Bussystems (1) in einem Rahmen (450) für eine Nachricht (45; 46) mindestens eine erste Kommunikationsphase (451, 452, 454, 455) und eine zweite Kommunikationsphase (453) verwendet werden, und zum Erzeugen eines digitalen Empfangssignals (RxD_TC) aus einem von dem Bus (40) empfangenen Signal,
einem ersten Anschluss (121) zum Empfang, in einer Betriebsart der ersten Kommunikationsphase (451, 452, 454, 455) eines Rahmens (450), eines Sendesignals (TxD) von einer Kommunikationssteuereinrichtung (11; 31),
einem zweiten Anschluss (122) zum Senden, in einer Betriebsart der ersten Kommunikationsphase (451, 452, 454, 455) des Rahmens (450), des digitalen Empfangssignals (RxD_TC) an die Kommunikationssteuereinrichtung (11; 31), und
einem Betriebsartschaltmodul (16) zum Schalten der Übertragungsrichtung des ersten und zweiten Anschlusses (121, 122) in der zweiten Kommunikationsphase (453) des Rahmens (450) in die gleiche Richtung für eine differentielle Signalübertragung über den ersten und zweiten Anschluss (121, 122).

7. Sende-/Empfangseinrichtung (12; 32) nach Anspruch 6,
wobei das Betriebsartschaltmodul (16; 36) ausgestaltet ist, in einer ersten Betriebsart der zweiten Kommunikationsphase (453) den ersten und zweiten Anschluss (121, 122) als Eingang zu schalten und aus dem an dem ersten und zweiten Anschluss (121, 122) empfangenen differentiellen digitalen Sendesignal (TxD1_TC, TxD2_TC) ein nicht-differentielles Sendesignal (TxD_TC) zu erzeugen, und/oder
wobei das Betriebsartschaltmodul (16; 36) ausgestaltet ist, in einer zweiten Betriebsart der zweiten Kommunikationsphase (453) den ersten und zweiten Anschluss (121, 122) als Ausgang zu schalten und aus dem digitalen Empfangssignal (RxD_TC) ein inverses digitales Empfangssignal (RxD2_TC) zu erzeugen sowie das digitale Empfangssignal (RxD_TC) an dem zweiten Anschluss (122) und das dazu inverse digitale Empfangssignal (RxD2_TC) an dem ersten Anschluss (121) auszugeben.

8. Sende-/Empfangseinrichtung (12; 32) nach Anspruch 6 oder 7, wobei das Betriebsartschaltmodul (16) ausgestaltet ist, in der zweiten Betriebsart der zweiten Kommunikationsphase (453) an den beiden Anschlüssen (121, 122) für eine vorbestimmte Zeitdauer (T) die beiden Empfangssignale (RxD_TC, RxD2_TC) mit demselben Pegel zu erzeugen und auszugeben, um der Kommunikationssteuereinrichtung (12) Zusatzinformationen zu signalisieren, die zusätzlich zu Informationen der Signale sind, die in dem Bussystem (1) mit den Nachrichten (45; 46) zwischen Teilnehmerstationen (10; 30) des Bussystems (1) ausgetauscht werden.

9. Sende-/Empfangseinrichtung (12; 32) nach einem der Ansprüche 6 bis 8,
wobei das Sende-/Empfangsmodul (123) ausgestaltet ist, das Sendesignal (TxD_TC) als differentielles Signal (CAN_H, CAN_L) auf den Bus (40) zu senden.

10. Einrichtung (11; 12; 32) nach einem der vorangehenden Ansprüche, wobei das Betriebsartschaltmodul (15; 16; 36) ausgestaltet ist, die Übertragungsrichtung des ersten und zweiten Anschlusses (111, 112; 121, 122) abhängig von einer Betriebsart zu wählen, in welche die Sende-/Empfangseinrichtung (12; 32) geschaltet ist.

11. Einrichtung (11; 12; 32) nach einem der vorangehenden Ansprüche, wobei das Betriebsartschaltmodul (15; 16; 35, 36) aufweist
einen Richtungssteuerblock (151; 161) zum Steuern der Übertragungsrichtung des ersten und zweiten Anschlusses (111, 112; 121, 122) in Abhängigkeit von der Betriebsart der Sende-/Empfangseinrichtung (12; 32),
einen Codierblock (152; 162) zum Codieren der differentiellen Signale (TxD2; RxD2_TC),
einen Decodierblock (153; 163) zum Decodieren der differentiellen Signale (TxD2; RxD2_TC) an dem ersten und zweiten Anschluss (111, 112; 121, 122) in ein nicht-differentielles Signal (TxD_TC; RxD_PRT), und
einen Multiplexer (154; 164) zum Ausgeben des von dem Decodierblock (153; 163) erzeugten nicht-differentiellen Signals (TxD_TC; RxD_PRT), wenn die Sende-/Empfangseinrichtung (12; 32) in eine Betriebsart der zweiten Kommunikationsphase (453) geschaltet ist.

12. Einrichtung (11; 12; 32) nach einem der vorangehenden Ansprüche, wobei das in der ersten Kommunikationsphase (451, 452, 454, 455) von dem Bus (40) empfangene Signal mit einem anderen Physical Layer erzeugt ist als das in der zweiten Kommunikationsphase (453) von dem Bus (40) empfangene Signal.

13. Einrichtung (11; 12; 31; 32) nach einem der vorangehenden Ansprüche, wobei in der ersten Kommunikationsphase (451) ausgehandelt wird, welche der Teilnehmerstationen (10, 20, 30) des Bussystems (1) in der nachfolgenden zweiten Kommunikationsphase (453) einen zumindest zeitweise exklusiven, kollisionsfreien Zugriff auf den Bus (40) bekommt.

14. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Kommunikationssteuereinrichtung (11; 31) nach einem der Ansprüche 1 bis 5 und 10 bis 13 und eine Sende-/Empfangseinrichtung (12; 32) nach einem der Ansprüche 6 bis 13 aufweist.

15. Verfahren zur Kommunikation in einem seriellen Bussystem (1), wobei das Verfahren mit einer Teilnehmerstation (10; 30) für ein Bussystem (1) ausgeführt wird, bei welchem zum Austausch von Nachrichten (45; 46) zwischen Teilnehmerstationen (10, 20, 30) des Bussystems (1) in einem Rahmen (450) für eine Nachricht (45; 46) mindestens eine erste Kommunikationsphase (451, 452, 454, 455) und eine zweite Kommunikationsphase (453) verwendet werden, wobei die Teilnehmerstation (10; 30) eine Kommunikationssteuereinrichtung (11; 31) nach einem der Ansprüche 1 bis 5 und 10 bis 13 und eine Sende-/Empfangseinrichtung (12; 32) nach einem der Ansprüche 6 bis 13 aufweist, und wobei das Verfahren die Schritte aufweist
Schalten, mit einem Betriebsartschaltmodul (15; 35) für die Kommunikationssteuereinrichtung (11; 31), der Übertragungsrichtung des ersten und zweiten Anschlusses (111, 112) für die Kommunikationssteuereinrichtung (11; 31) in der zweiten Kommunikationsphase (453) des Rahmens (450) in die gleiche Richtung, und
Schalten, mit einem Betriebsartschaltmodul (16; 36) für die Sende-/Empfangseinrichtung (12; 32), der Übertragungsrichtung des ersten und zweiten Anschlusses (121, 122) für die Sende-/Empfangseinrichtung (12; 32) in der zweiten Kommunikationsphase (453) des Rahmens (450) in die gleiche Richtung, die sich von der Richtung unterscheidet, in die der erste und zweite Anschluss für die Kommunikationssteuereinrichtung geschaltet sind, und
Ausführen einer differentiellen Signalübertragung zwischen der Kommunikationssteuereinrichtung (11; 31) und der Sende-/Empfangseinrichtung (12; 32) über den ersten und zweiten Anschluss (111, 112) für die Kommunikationssteuereinrichtung (11; 31) und den ersten und zweiten Anschluss (121, 122) für die Sende-/Empfangseinrichtung (12; 32).

## Claims

1. Communication control device (11) for a subscriber station (10) of a serial bus system (1), having
a communication control module (113) for generating a transmission signal (TxD_PRT) for controlling communication between the subscriber station (10) and at least one other subscriber station (10; 20; 30) of the bus system (1), in which bus system (1) at least a first communication phase (451, 452, 454, 455) and a second communication phase (453) are used to exchange messages (45; 46) between subscriber stations (10, 20, 30) of the bus system (1) in a frame (450) for a message (45; 46),
a first connection (111) for transmitting, in an operating mode of the first communication phase (451, 452, 454, 455) of a frame (450), the transmission signal (TxD_PRT) to a transmitting/receiving device (12; 32) configured to transmit the transmission signal (TxD) to a bus (40) of the bus system (1),
a second connection (122) for receiving, in the operating mode of the first communication phase (451, 452, 454, 455) of the frame (450), a digital received signal (RxD) from the transmitting/receiving device (12; 32), and
an operating mode switching module (15) for switching the transmission direction of the first and second connections (111, 112) in the second communication phase (453) of the frame (450) to the same direction for differential signal transmission via the first and second connections (111, 112).

2. Communication control device (11) according to Claim 1,
wherein the operating mode switching module (15) is configured so as, in a first operating mode of the second communication phase (453), to switch the first and second connections (111, 112) as an output and to use the transmission signal (TxD_PRT) to generate an inverse digital transmission signal (TxD2) and to output the transmission signal (TxD_PRT) on the first connection (111) and the inverse digital transmission signal (TxD2) on the second connection (112), and/or
wherein the operating mode switching module (15) is configured so as, in a second operating mode of the second communication phase (453), to switch the first and second connections (111, 112) as an input and to use the differential received signal (RxD1, RxD2) received on the first and second connections (111, 112) to generate a non-differential received signal (RxD_PRT) and to output it to the communication control module (113).

3. Communication control device (11) according to Claim 1 or 2, wherein the operating mode switching module (15) is configured so as, in the first operating mode of the second communication phase (453), to generate and output the two transmission signals (TxD_PRT, TxD2) with the same level on the two connections (111, 112) for a predetermined period of time (T) in order to signal to the transmitting/receiving device (12) that the operating mode of the transmitting/receiving device (12) needs to be switched from the first operating mode of the second communication phase (453) to the operating mode of the first communication phase (451, 452, 454, 455).

4. Communication control device (11) according to one of the preceding claims, wherein the operating mode switching module (15) is configured to use the first or second connection (111; 112) to signal to the transmitting/receiving device (12) that the transmitting/receiving device (12) needs to switch its operating mode from the operating mode of the first communication phase (451, 452, 454, 455) to a predetermined operating mode of the second communication phase (453).

5. Communication control device (11) according to one of the preceding claims, wherein the communication control module (113) is configured to generate the transmission signal (TxD_PRT) in the first communication phase (451, 452, 454, 455) with bits having a first bit time (T_B1), which is at least a factor of 10 greater than a second bit time (T_B2) of bits that the communication control module (113) generates in the transmission signal (TxD_PRT) in the second communication phase (453).

6. Transmitting/receiving device (12; 32) for a subscriber station (10; 30) of a serial bus system (1), having
a transmitting/receiving module (123) for transmitting a transmission signal (TxD_TC) to a bus (40) of the bus system (1), in which bus system (1) at least a first communication phase (451, 452, 454, 455) and a second communication phase (453) are used to exchange messages (45; 46) between subscriber stations (10, 20, 30) of the bus system (1) in a frame (450) for a message (45; 46), and for generating a digital received signal (RxD_TC) from a signal received from the bus (40),
a first connection (121) for receiving, in an operating mode of the first communication phase (451, 452, 454, 455) of a frame (450), a transmission signal (TxD) from a communication control device (11; 31),
a second connection (122) for transmitting, in an operating mode of the first communication phase (451, 452, 454, 455) of the frame (450), the digital received signal (RxD_TC) to the communication control device (11; 31), and
an operating mode switching module (16) for switching the transmission direction of the first and second connections (121, 122) in the second communication phase (453) of the frame (450) to the same direction for differential signal transmission via the first and second connections (121, 122).

7. Transmitting/receiving device (12; 32) according to Claim 6,
wherein the operating mode switching module (16; 36) is configured so as, in a first operating mode of the second communication phase (453), to switch the first and second connections (121, 122) as an input and to use the differential digital transmission signal (TxD1_TC, TxD2_TC) received on the first and second connections (121, 122) to generate a non-differential transmission signal (TxD_TC), and/or
wherein the operating mode switching module (16; 36) is configured so as, in a second operating mode of the second communication phase (453), to switch the first and second connections (121, 122) as an output and to use the digital received signal (RxD_TC) to generate an inverse digital received signal (RxD2_TC) and to output the digital received signal (RxD_TC) on the second connection (122) and the inverse digital received signal (RxD2_TC) on the first connection (121).

8. Transmitting/receiving device (12; 32) according to Claim 6 or 7, wherein the operating mode switching module (16) is configured so as, in the second operating mode of the second communication phase (453), to generate and output the two received signals (RxD_TC, RxD2_TC) with the same level on the two connections (121, 122) for a predetermined period of time (T) in order to signal additional information to the communication control device (12), which is in addition to information in the signals exchanged in the bus system (1) using the messages (45; 46) between subscriber stations (10; 30) of the bus system (1).

9. Transmitting/receiving device (12; 32) according to one of Claims 6 to 8, wherein the transmitting/receiving module (123) is configured to transmit the
transmission signal (TxD_TC) to the bus (40) as a differential signal (CAN_H, CAN_L).

10. Device (11; 12; 32) according to one of the preceding claims, wherein the operating mode switching module (15; 16; 36) is configured to select the transmission direction of the first and second connections (111, 112; 121, 122) according to an operating mode to which the transmitting/receiving device (12; 32) is switched.

11. Device (11; 12; 32) according to one of the preceding claims, wherein the operating mode switching module (15; 16; 35, 36) comprises
a direction control block (151; 161) for controlling the transmission direction of the first and second connections (111, 112; 121, 122) on the basis of the operating mode of the transmitting/receiving device (12; 32),
a coding block (152; 162) for coding the differential signals (TxD2; RxD2_TC),
a decoding block (153; 163) for decoding the differential signals (TxD2; RxD2_TC) on the first and second connections (111, 112; 121, 122) into a non-differential signal (TxD_TC; RxD_PRT), and
a multiplexer (154; 164) for outputting the non-differential signal (TxD_TC; RxD_PRT) generated by the decoding block (153; 163) when the transmitting/receiving device (12; 32) is switched to an operating mode of the second communication phase (453).

12. Device (11; 12; 32) according to one of the preceding claims, wherein the signal received from the bus (40) in the first communication phase (451, 452, 454, 455) is generated with a different physical layer than the signal received from the bus (40) in the second communication phase (453).

13. Device (11; 12; 31; 32) according to one of the preceding claims, wherein negotiation takes place in the first communication phase (451) in order to determine which of the subscriber stations (10, 20, 30) of the bus system (1) receives at least temporarily exclusive, collision-free access to the bus (40) in the subsequent, second communication phase (453).

14. Bus system (1), having
a bus (40), and
at least two subscriber stations (10; 20; 30) that are connected to one another via the bus (40) in such a way that they can communicate serially with one another and at least one subscriber station (10; 30) of which has a communication control device (11; 31) according to one of Claims 1 to 5 and 10 to 13 and a transmitting/receiving device (12; 32) according to one of Claims 6 to 13.

15. Method for communication in a serial bus system (1), wherein the method is carried out using a subscriber station (10; 30) for a bus system (1) in which at least a first communication phase (451, 452, 454, 455) and a second communication phase (453) are used to exchange messages (45; 46) between subscriber stations (10, 20, 30) of the bus system (1) in a frame (450) for a message (45; 46), wherein the subscriber station (10; 30) has a communication control device (11; 31) according to one of Claims 1 to 5 and 10 to 13 and a transmitting/receiving device (12; 32) according to one of Claims 6 to 13, and wherein the method has the steps of
switching, using an operating mode switching module (15; 35) for the communication control device (11; 31), the transmission direction of the first and second connections (111, 112) for the communication control device (11; 31) in the second communication phase (453) of the frame (450) to the same direction, and
switching, using an operating mode switching module (16; 36) for the transmitting/receiving device (12; 32), the transmission direction of the first and second connections (121, 122) for the transmitting/receiving device (12; 32) in the second communication phase (453) of the frame (450) to the same direction, which is different than the direction to which the first and second connections for the communication control device are switched, and
performing a differential signal transmission between the communication control device (11; 31) and the transmitting/receiving device (12; 32) via the first and second connections (111, 112) for the communication control device (11; 31) and the first and second connections (121, 122) for the transmitting/receiving device (12; 32).

## Revendications

1. Dispositif de commande de communication (11) pour une station d'abonné (10) d'un système de bus série (1), comprenant
un module de commande de communication (113) pour produire un signal d'émission (TxD_PRT) pour commander une communication de la station d'abonné (10) avec au moins une autre station d'abonné (10 ; 20 ; 30) du système de bus (1), dans lequel système de bus (1) au moins une première phase de communication (451, 452, 454, 455) et une deuxième phase de communication (453) sont utilisées pour échanger des messages (45 ; 46) entre stations d'abonné (10, 20, 30) du système de bus (1) dans une trame (450) pour un message (45 ; 46),
une première borne (111) pour émettre, dans un mode de fonctionnement de la première phase de communication (451, 452, 454, 455) d'une trame (450), le signal d'émission (TxD_PRT) à un dispositif d'émission/réception (12 ; 32) qui est configuré pour émettre le signal d'émission (TxD) sur un bus (40) du système de bus (1),
une deuxième borne (122) pour recevoir, dans le mode de fonctionnement de la première phase de communication (451, 452, 454, 455) de la trame (450), un signal de réception numérique (RxD) du dispositif d'émission/réception (12 ; 32), et
un module de commutation de mode de fonctionnement (15) pour commuter le dispositif de transmission de la première et de la deuxième borne (111, 112) dans la deuxième phase de communication (453) de la trame (450) dans la même direction pour une transmission de signal différentielle par l'intermédiaire de la première et de la deuxième borne (111, 112).

2. Dispositif de commande de communication (11) selon la revendication 1,
dans lequel le module de commutation de mode de fonctionnement (15) est configuré pour commuter la première et la deuxième borne (111, 112) en tant que sortie dans un premier mode de fonctionnement de la deuxième phase de communication (453), et pour produire un signal d'émission numérique inverse (TxD2) à partir du signal d'émission (TxD_PRT) et pour sortir le signal d'émission (TxD_PRT) à la première borne (111) et le signal d'émission numérique (TxD2) inverse à celui-ci à la deuxième borne (112), et/ou
dans lequel le module de commutation de mode de fonctionnement (15) est configuré pour commuter la première et la deuxième borne (111, 112) en tant qu'entrée dans le deuxième mode de fonctionnement de la deuxième phase de communication (453), et pour produire un signal de réception non différentiel (RxD_PRT) à partir du signal de réception différentiel (RxD1, RxD2) reçu à la première et à la deuxième borne (111, 112) et pour le sortir au module de commande de communication (113).

3. Dispositif de commande de communication (11) selon la revendication 1 ou 2, dans lequel le module de commutation de mode de fonctionnement (15) est configuré pour produire et sortir dans le premier mode de fonctionnement de la deuxième phase de communication (453) aux deux bornes (111, 112) pendant une durée prédéterminée (T) les deux signaux d'émission (TxD_PRT, TxD2) au même niveau afin de signaler au dispositif d'émission/réception (12) que le mode de fonctionnement du dispositif d'émission/réception (12) est à commuter du premier mode de fonctionnement de la deuxième phase de communication (453) au mode de fonctionnement de la première phase de communication (451, 452, 454, 455).

4. Dispositif de commande de communication (11) selon l'une quelconque des revendications précédentes, dans lequel le module de commutation de mode de fonctionnement (15) est configuré pour signaler au dispositif d'émission/réception (12) par l'intermédiaire de la première ou de la deuxième borne (111 ; 112) que le dispositif d'émission/réception (12) doit commuter son mode de fonctionnement du mode de fonctionnement de la première phase de communication (451, 452, 454, 455) dans un mode de fonctionnement prédéterminé de la deuxième phase de communication (453).

5. Dispositif de commande de communication (11) selon l'une quelconque des revendications précédentes, dans lequel le module de commande de communication (113) est configuré pour produire le signal d'émission (TxD_PRT) dans la première phase de communication (451, 452, 454, 455) avec des bits ayant un premier temps de bit (T_B1) qui est supérieur au moins d'un facteur 10 à un deuxième temps de bit (T_B2) des bits produits par le module de commande de communication (113) dans la deuxième phase de communication (453) dans le signal d'émission (TxD_PRT).

6. Dispositif d'émission/réception (12 ; 32) pour une station d'abonné (10 ; 30) d'un système de bus série (1), comprenant
un module d'émission/réception (123) pour émettre un signal d'émission (TxD_TC) sur un bus (40) du système de bus (1), dans lequel système de bus (1), pour échanger des messages (45, 46) entre des stations d'abonné (10, 20, 30) du système de bus (1), dans une trame (450) pour un message (45 ; 46), au moins une première phase de communication (451, 452, 454, 455) et une deuxième phase de communication (453) sont utilisées, et pour produire un signal de réception numérique (RxD_TC) à partir du signal reçu du bus (40),
une première borne (121) pour recevoir, dans un mode de fonctionnement de la première phase de communication (451, 452, 454, 455) d'une trame (450), un signal d'émission (TxD) d'un dispositif d'émission/réception (11 ; 31),
une deuxième borne (122) pour émettre, dans un mode de fonctionnement de la première phase de communication (451, 452, 454, 455) de la trame (450), le signal de réception numérique (RxD_TC) au dispositif de commande de communication (11 ; 31), et
un module de commutation de mode de fonctionnement (16) pour commuter la direction de transmission de la première et de la deuxième borne (121, 122) dans la deuxième phase de communication (453) de la trame (450) dans la même direction pour une transmission de signal différentielle par l'intermédiaire de la première et de la deuxième borne (121, 122).

7. Dispositif d'émission/réception (12 ; 32) selon la revendication 6,
dans lequel le module de commutation de mode de fonctionnement (16 ; 36) est configuré pour commuter, dans un premier mode de fonctionnement de la deuxième phase de communication (453), la première et la deuxième borne (121, 122) en tant qu'entrée, et pour produire un signal d'émission non différentiel (TxD_TC) à partir du signal de réception différentiel (TxD1_TC, TxD2_TC) reçu à la première et à la deuxième borne (121, 122), et/ou
dans lequel le module de commutation de mode de fonctionnement (16 ; 36) est configuré pour commuter, dans un deuxième mode de fonctionnement de la deuxième phase de communication (453), la première et la deuxième borne (121, 122) en tant que sortie, et pour produire un signal de réception numérique inverse (RxD2_TC) à partir du signal de réception numérique (RxD_TC), et pour sortir le signal de réception numérique (RxD_TC) à la deuxième borne (122) et le signal de réception numérique (RxD2_TC) inverse à celui-ci à la première borne (121).

8. Dispositif d'émission/réception (12 ; 32) selon la revendication 6 ou 7, dans lequel le module de commutation de mode de fonctionnement (16) est configuré, dans le deuxième mode de fonctionnement de la deuxième phase de communication (453), pour produire et sortir aux deux bornes (121, 122) pendant une durée prédéterminée (T) les deux signaux de réception (RxD_TC, RxD2_TC) avec le même niveau pour signaler des informations supplémentaires au dispositif de commande de communication (12) qui s'ajoutent aux informations des signaux qui sont échangés dans le système de bus (1) avec les messages (45 ; 46) entre les stations d'abonné (10 ; 30) du système de bus (1).

9. Dispositif d'émission/réception (12 ; 32) selon l'une quelconque des revendications 6 à 8,
dans lequel le module d'émission/réception (123) est configuré pour émettre le signal d'émission (TxD_TC) sous forme de signal différentiel (CAN_H, CAN_L) sur le bus (40).

10. Dispositif (11 ; 12 ; 32) selon l'une quelconque des revendications précédentes, dans lequel le module de commutation de mode de fonctionnement (15 ; 16 ; 36) est configuré pour sélectionner la direction de transmission de la première et de la deuxième borne (111, 112 ; 121, 122) en fonction d'un mode de fonctionnement sur lequel est commuté le dispositif d'émission/réception (12 ; 32).

11. Dispositif (11 ; 12 ; 32) selon l'une quelconque des revendications précédentes, dans lequel le module de commutation de mode de fonctionnement (15 ; 16 ; 35 ; 36) présente
un bloc de commande de direction (151 ; 161) pour commander la direction de transmission de la première et de la deuxième borne (111, 112 ; 121, 122) en fonction du mode de fonctionnement du dispositif d'émission/réception (12 ; 32),
un bloc de codage (152 ; 162) pour coder les signaux différentiels (TxD2 ; RxD2_TC),
un bloc de décodage (153 ; 163) pour décoder les signaux différentiels (TxD2 ; RxD2_TC) à la première et à la deuxième borne (111, 112 ; 121, 122) en un signal non différentiel (TxD_TC ; RxD_PRT), et
un multiplexeur (154 ; 164) pour sortir le signal non différentiel (TxD_TC ; RxD_PRT) produit par le bloc de décodage (153 ; 163) lorsque le dispositif d'émission/réception (12 ; 32) est commuté sur un mode de fonctionnement de la deuxième phase de communication (453).

12. Dispositif (11 ; 12 ; 32) selon l'une quelconque des revendications précédentes, dans lequel le signal reçu du bus (40) dans la première phase de communication (451, 452, 454, 455) est produit avec une couche physique différente par rapport au signal reçu du bus (40) dans la deuxième phase de communication (453).

13. Dispositif (11 ; 12 ; 31 ; 32) selon l'une des revendications précédentes, dans lequel on négocie dans la première phase de communication (451) laquelle des stations d'abonné (10, 20, 30) du système de bus (1) obtient un accès au bus (40) au moins temporairement exclusif, sans collision, dans la deuxième phase de communication (453) consécutive.

14. Système de bus (1), comprenant un bus (40), et
au moins deux stations d'abonné (10 ; 20 ; 30) qui sont reliées l'une à l'autre par le bus (40) de telle sorte qu'elles peuvent communiquer en série entre elles et parmi lesquelles au moins une station d'abonné (10 ; 30) présente un dispositif de commande de communication (11 ; 31) selon l'une quelconque des revendications 1 à 5 et 10 à 13 ainsi qu'un dispositif d'émission/réception (12 ; 32) selon l'une quelconque des revendications 6 à 13.

15. Procédé de communication dans un système de bus série (1), dans lequel le procédé est effectué avec une station d'abonné (10 ; 30) pour un système de bus (1), dans lequel au moins une première phase de communication (451, 452, 454, 455) et une deuxième phase de communication (453) dans une trame (450) pour un message (45 ; 46) sont utilisées pour échanger des messages (45 ; 46) entre des stations d'abonné (10, 20, 30) du système de bus (1), dans lequel la station d'abonné (10 ; 30) présente un dispositif de commande de communication (11 ; 31) selon l'une quelconque des revendications 1 à 5 et 10 à 13 et un dispositif d'émission/réception (12 ; 32) selon l'une quelconque des revendications 6 à 13, et dans lequel le procédé présente les étapes consistant à
commuter, par un module de commutation de mode de fonctionnement (15 ; 35) pour le dispositif de commande de communication (11 ; 31), la direction de transmission de la première et de la deuxième borne (111, 112) pour le dispositif de commande de communication (11 ; 31) dans la deuxième phase de communication (453) de la trame (450) dans la même direction, et
commuter, par un module de commutation de mode de fonctionnement (16 ; 36) pour le dispositif d'émission/réception (12 ; 32), la direction de transmission de la première et de la deuxième borne (121, 122) pour le dispositif d'émission/réception (12 ; 32) dans la deuxième phase de communication (453) de la trame (450) dans la même direction qui est différente de la direction dans laquelle la première et la deuxième borne sont commutées pour le dispositif de commande de commutation, et
effectuer une transmission de signal différentielle entre le dispositif de commande de communication (11 ; 31) et le dispositif d'émission/réception (12 ; 32) par l'intermédiaire de la première et de la deuxième borne (111, 112) pour le dispositif de commande de communication (11 ; 31) et de la première et de la deuxième borne (121, 122) pour le dispositif d'émission/réception (12 ; 32).
